# EUROPEAN PATENT APPLICATION

(11) **EP 4 295 989 A1**
(43) Date of publication of application: **27.12.2023**
(21) Application number: 21923153.7
(22) Date of filing: 08.12.2021
(51) Int. Cl.: B23K 26/34, B23P 23/04, B23Q 3/02

(54) **PROCESSING SYSTEM**

(30) Priority: 28.01.2021 JP 2021000274 U
(71) Applicant: NIKON CORPORATION, Minato-ku Tokyo 108-6290 (JP)
(72) Inventor: UENO, Kazuki, Tokyo 108-6290 (JP)
(74) Representative: Hoffmann Eitle
(86) International application number: PCT/JP2021/045141
(87) International publication number: WO 2022/163148

(57) **Abstract**

A processing system includes: a processing apparatus configured to perform an additive processing on a plurality of objects; and a control apparatus configured to control the processing apparatus, the control apparatus generates, based on a result of a first measurement operation for measuring a shape of a first object of the plurality of objects, first processing control information for controlling the processing apparatus to perform the additive processing on the first object, the processing apparatus performs, based on the first processing control information, the additive processing on the first object and the additive processing on a second object of the plurality of objects that is different from the first object.

## Description

### Technical Field

The present invention relates to a technical field of a processing system configured to process an object.

### Background Art

APatent Literature 1 discloses one example of a processing system configured to process an object. A technical problem of this type of processing system is to adopt a configuration for efficiently processing the object.

### Citation List

### Patent Literature

Patent Literature 1: US8,636.496B

### Summary of Invention

A first aspect provides a processing system including: a processing apparatus configured to perform an additive processing on a plurality of objects; and a control apparatus configured to control the processing apparatus, the control apparatus is configured to generate, based on a result of a first measurement operation for measuring a shape of a first object of the plurality of objects, first processing control information for controlling the processing apparatus to perform the additive processing on the first object, the processing apparatus is configured to perform, based on the first processing control information, the additive processing on the first object and the additive processing on a second object of the plurality of objects that is different from the first obj ect.

A second aspect provides a processing system including: a processing apparatus configured to perform a repair processing on a plurality of objects; and a control apparatus configured to control the processing apparatus, the control apparatus is configured to generate, based on at least one of shape information related to a shape of a first object of the plurality of objects after repair and a measured result of a shape of the first object, first processing control information for controlling the processing apparatus to process the first object, the processing apparatus is configured to perform, based on the first processing control information, the repair processing on the first object and a second object of the plurality of objects that is different from the first object.

A third aspect provides a processing system including: a processing apparatus configured to perform a repair processing on a plurality of parts of an object; and a control apparatus configured to control the processing apparatus, the control apparatus is configured to generate, based on at least one of shape information related to a shape of a first part of the plurality of parts after repair and a measured result of a shape of the first part, first processing control information for controlling the processing apparatus to process the first part, the processing apparatus is configured to perform, based on the first processing control information, the repair processing on the first part and a second part of the plurality of parts that is different from the first part.

A fourth aspect provides a processing system including: a processing apparatus configured to perform an additive processing on a plurality of workpieces; and a control apparatus configured to control the processing apparatus, the control apparatus is configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece, the processing apparatus is configured to perform, based on the first processing control information, a repair processing on the first workpiece and a second workpiece of the plurality of objects that is different from the first workpiece.

A fifth aspect provides a processing system including: a processing apparatus configured to process a plurality of objects; and a control apparatus configured to control the processing apparatus, the control apparatus is configured to generate, based on a result of a first measurement operation for measuring a shape of a first object of the plurality of obj ects, first processing control information for controlling the processing apparatus to process the first object, the processing apparatus is configured to process the first object and process a second object of the plurality of objects that is different from the first object based on the first processing control information.

A sixth aspect provides a processing system including: a processing apparatus configured to perform an additive processing on a plurality of objects; and a control apparatus configured to control the processing apparatus, the control apparatus is configured to generate, based on a result of a first measurement operation for measuring a shape of a first object of the plurality of objects, first processing control information for controlling the processing apparatus to perform the additive processing on the first object, the processing apparatus is configured to perform, based on the first processing control information, the additive processing on the first object and the additive processing on a second object of the plurality of objects that is different from the first object.

A seventh aspect provides a processing system including: a processing apparatus configured to perform a repair processing on a plurality of objects; and a control apparatus configured to control the processing apparatus, the control apparatus is configured to generate, based on at least one of shape information related to a shape of a first object of the plurality of objects after repair and a measured result of a shape of the first object, first processing control information for controlling the processing apparatus to process the first object, the processing apparatus is configured to perform, based on the first processing control information, the repair processing on the first object and a second object of the plurality of objects that is different from the first object.

An eighth aspect provides a processing system including: a processing apparatus configured to perform a repair processing on a plurality of parts of an object; and a control apparatus configured to control the processing apparatus, the control apparatus is configured to generate, based on at least one of shape information related to a shape of a first part of the plurality of parts after repair and a measured result of a shape of the first part, first processing control information for controlling the processing apparatus to process the first part, the processing apparatus is configured to perform, based on the first processing control information, the repair processing on the first part and a second part of the plurality of parts that is different from the first part.

A ninth aspect provides a processing system including: a processing apparatus configured to perform an additive processing on a plurality of workpieces; and a control apparatus configured to control the processing apparatus, the control apparatus is configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece, the processing apparatus is configured to perform, based on the first processing control information, a repair processing on the first workpiece and a second workpiece of the plurality of objects that is different from the first workpiece.

A tenth aspect provides a processing system including: a processing apparatus configured to process a plurality of objects; and a control apparatus configured to control the processing apparatus, the control apparatus is configured to generate, based on a result of a first measurement operation for measuring a shape of a first object of the plurality of objects, first processing control information for controlling the processing apparatus to process the first object, the processing apparatus is configured to process the first object and process a second object of the plurality of objects that is different from the first object based on the first processing control information.

An operation and other advantage of the present invention will be described in a below-described example embodiment.

### Brief Description of Drawings

[FIG. 1] FIG. 1 is a block diagram that illustrates a system configuration of a processing system in a present example embodiment.
[FIG. 2] FIG. 2 is a cross-sectional view that illustrates a configuration of the processing system in the present example embodiment.
[FIG. 3] FIG. 3 is a cross-sectional view that illustrates a configuration of the processing system in the present example embodiment.
[FIG. 4] Each of FIG. 4A to FIG 4E is a cross-sectional view that illustrates an aspect in which a certain area on a workpiece is irradiated with a processing light and build materials are supplied thereto.
[FIG. 5] Each of FIG. 5A to FIG. 5C is a cross-sectional view that illustrates a process for forming a three-dimensional structural object.
[FIG. 6] FIG. 6 is a flowchart that illustrates a flow of an operation for performing an additive processing on a plurality of workpieces.
[FIG. 7] FIG. 7 is a perspective view that illustrates the plurality of workpieces placed on a stage.
[FIG. 8] FIG. 8 is a cross-sectional view that illustrates the plurality of workpieces placed on the stage.
[FIG. 9] FIG. 9 is a cross-sectional view that illustrates the plurality of workpieces placed on the stage.
[FIG. 10] FIG. 10 schematically illustrates a three-dimensional model used in a process of generating processing control information.
[FIG. 11] FIG. 11 is a cross-sectional view that illustrates the plurality of workpieces on which the additive processing has been performed.
[FIG. 12] FIG. 12 is a flowchart that illustrates a flow of a first modified example of the operation for performing the additive processing on the plurality of workpieces.
[FIG. 13] FIG. 13 is a flowchart that illustrates a flow of a second modified example of the operation for performing the additive processing on the plurality of workpieces.
[FIG. 14] FIG. 14 is a flowchart that illustrates a flow of a third modified example of the operation for performing the additive processing on the plurality of workpieces.
[FIG. 15] FIG. 15 is a flowchart that illustrates a flow of a fourth modified example of the operation for performing the additive processing on the plurality of workpieces.
[FIG. 16] FIG. 16 is a cross-sectional view that illustrates a supply path of build materials from a plurality of material nozzles.
[FIG. 17] FIG. 17 is a graph that illustrates a relationship between a build amount and a distance between a build surface and the material nozzle.
[FIG. 18] FIG. 18 illustrates the plurality of workpieces on which the additive processing has not been performed yet, distances between the material nozzle and the plurality of workpieces, build amounts for the plurality of workpieces, and the plurality of workpieces on which the additive processing has been performed.
[FIG. 19] FIG. 19 is a flowchart that illustrates a flow of a sixth modified example of the operation for performing the additive processing on the plurality of workpieces.
[FIG. 20] FIG. 20A is a cross-sectional view that illustrates a positional relationship between a processing head and the plurality of workpieces before attitudes of the plurality of workpieces are changed, and FIG. 20B is a cross-sectional view that illustrates a positional relationship between the processing head and the plurality of workpieces after the attitudes of the plurality of workpieces are changed.
[FIG. 21] FIG. 21A is a cross-sectional view that illustrates the positional relationship between the processing head and the plurality of workpieces before the attitudes of the plurality of workpieces are changed, and FIG. 21B is a cross-sectional view that illustrates the positional relationship between the processing head and the plurality of workpieces after the attitudes of the plurality of workpieces are changed.
[FIG. 22] FIG. 22 is a cross-sectional view that illustrates the plurality of workpieces placed on the stage.

### Description of Example embodiments

Next, with reference to drawings, an example embodiment of a processing method and a processing system will be described. In the below-described description, the example embodiment of the processing method and the processing system will be described by using a processing system SYS that is configured to process a workpiece W that is one example of an object. Especially, in the below-described description, the example embodiment of the processing method and the processing system will be described by using the processing system SYS that is configured to perform an additive processing based on a Laser Metal Deposition (LMD). The additive processing based on the Laser Metal Deposition is an additive processing for building a build object that is integrated with or separatable from the workpiece W by melting a build material M supplied to the workpiece W with processing light EL (namely, an energy beam in a form of light). However, the processing system SYS may perform an additive processing based on a method different from the Laser Metal Deposition. Alternatively, the processing system SYS may perform any processing (for example, a removal processing) different from the additive processing.

Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below-described description, a positional relationship of various components included in the processing system SYS will be described by using an XYZ rectangular coordinate system that is defined by a X-axis, a Y-axis and a Z-axis that are perpendicular to one another. Note that each of an X-axis direction and a Y-axis direction is assumed to be a horizontal direction (namely, a predetermined direction in a horizontal plane) and a Z-axis direction is assumed to be a vertical direction (namely, a direction that is perpendicular to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1) Configuration of Processing System SYS

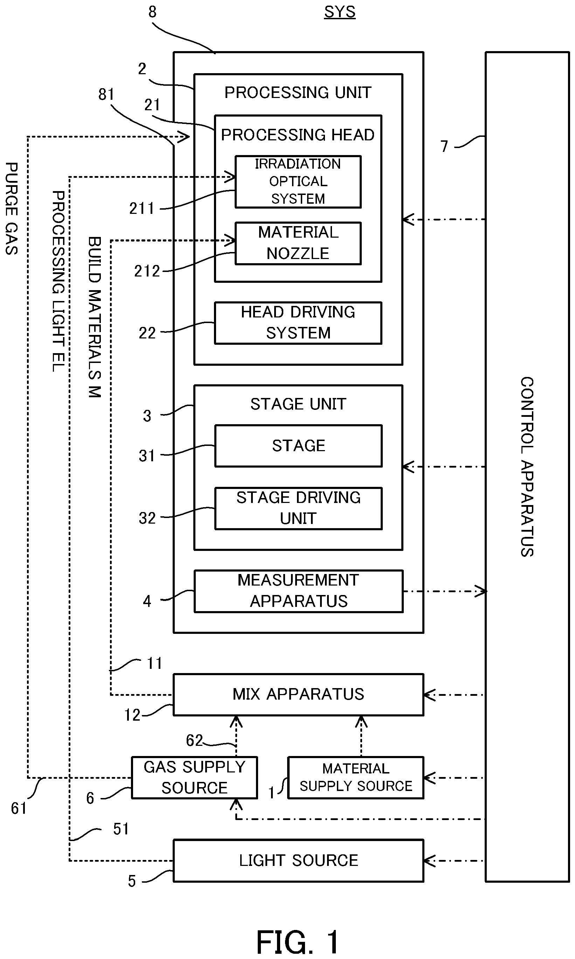

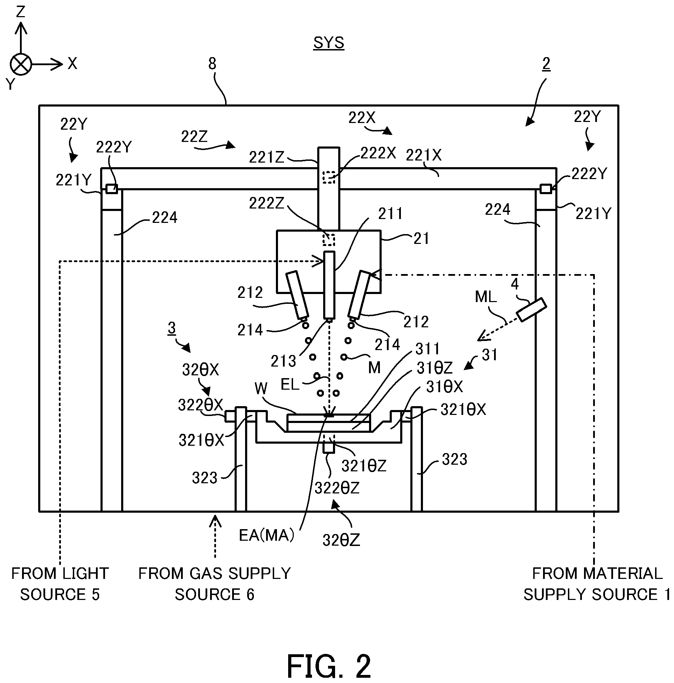

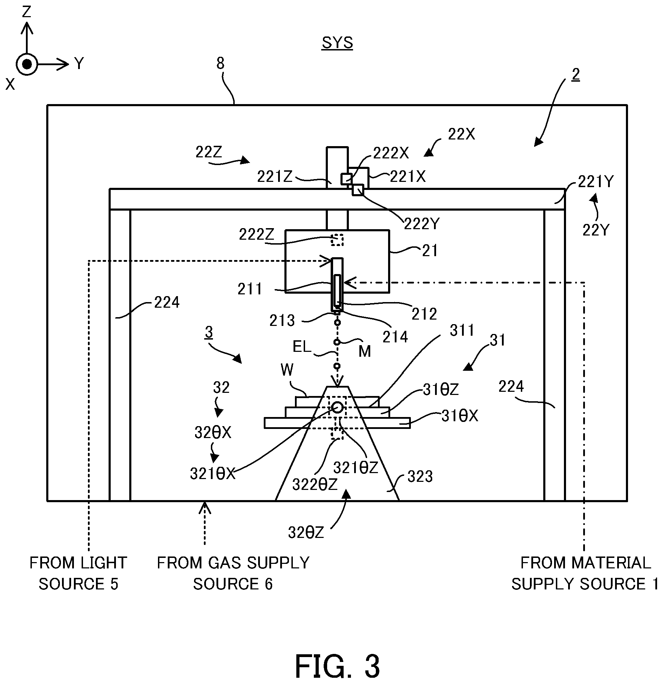

Firstly, with reference to FIG. 1 and FIG. 3, a configuration of the processing system SYS in the present example embodiment will be described. FIG. 1 is a system configuration diagram that illustrates a system configuration of the processing system SYS in the present example embodiment. Each of FIG. 2 and FIG. 3 is a cross-sectional view that illustrates the configuration of the processing system SYS in the present example embodiment.

The processing system SYS is configured to perform the additive processing on the workpiece W. The processing system SYS is configured to build the build object integrated with (alternatively, separatable from) the workpiece W by performing the additive processing on the workpiece W. In this case, the additive processing performed on the workpiece W corresponds to a processing for adding, to the workpiece W, the build object integrated with (alternatively, separatable from) the workpiece W. Note that the build object in the present example embodiment may mean any object built by the processing system SYS. For example, the processing system SYS is configured to build a three-dimensional structural object ST (namely, a three-dimensional object having a magnitude (a size) in each of three-dimensional directions, a solid object, in other words, an object having a magnitude (a size) in the X-axis direction, the Y-axis direction, and the Z-axis direction).

In a case where the workpiece W is a below-described stage 31, the processing system SYS is configured to perform the additive processing on the stage 31. In a case where the workpiece W is a placed object that is an object placed on the stage 31, the processing system SYS is configured to perform the additive processing on the placed object. The placed object placed on the stage 31 may be another three-dimensional structural object ST built by the processing system SYS (namely, an existing structural object). Note that FIG. 1 illustrates an example in which the workpiece W is the existing structural object held by the stage 31. Moreover, in the below-described description, the example in which the workpiece W is the existing structural object held by the stage 31 will be described.

The workpiece W may be an item that needs to be repaired having a missing part. In this case, the processing system SYS may perform a repair processing for repairing the item that needs to be repaired by performing the additive processing for building the build object for filling in the missing part. Namely, the additive processing performed by the processing system SYS may include the additive processing for adding, to the workpiece W, the build object for filling in the missing part.

As described above, the processing system SYS is configured to perform the additive processing based on the Laser Metal Deposition. Namely, it can be said that the processing system SYS is a 3D printer that forms an object by using an Additive layer manufacturing technique. Note that the Additive layer manufacturing technique may be referred to as a Rapid Prototyping, a Rapid Manufacturing or an Additive Manufacturing.

The processing system SYS performs the additive processing by processing the build material M with the processing light EL. The build material M is a material that is molten by an irradiation with the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery materials. However, the build materials M may not be the powdery materials. For example, at least one of a wired-like build material and a gas-like build material may be used as the build material M.

In order to perform the additive processing, the processing system SYS includes a material supply source 1, a processing unit 2, a stage unit 3, a measurement apparatus 4, a light source 5, a gas supply source 6, and a control apparatus 7, as illustrated in FIG. 1 to FIG. 3. The processing unit 2 and the stage unit 3 may be contained in an inner space in a housing 8.

The material supply source 1 is configured to supply the build materials M to the processing unit 2. The material supply source 1 supplies, to the processing unit 2, the build materials M the amount of which is necessary for performing the additive processing per unit time by supplying the build materials M the amount of which is based on the necessary amount.

The processing unit 2 builds the build object by processing the build materials M supplied from the material supply source 1. In order to build the build object, the processing unit 2 include a processing head 21, and a head driving system 22. Furthermore, the processing head 21 includes an irradiation optical system (an irradiation system) 211, and material nozzles 212 (namely, supply systems that supply the build materials M). The processing head 21 includes the plurality of material nozzles 212 (two material nozzles 212 in FIG. 1) in an example illustrate in FIG. 1, however, the processing head 21 may include a single material nozzle 212.

The irradiation optical system 211 is an optical system (for example, a condensing optical system) for emitting the processing light EL from an emission part. Specifically, the irradiation optical system 211 is optically connected to the light source 5 that generates the processing light EL through a light transmitting member 51 such as an optical fiber and light pipe. The irradiation optical system 211 emits the processing light EL transmitted from the light source 5 through the light transmitting member 51. The irradiation optical system 211 emits the processing light EL in a downward direction (namely, toward a -Z side) from the irradiation optical system 211. The stage 31 is disposed below the irradiation optical system 211. In a case where the workpiece W is placed on the stage 31, the irradiation optical system 211 emits the processing light EL, which is the energy beam, toward the workpiece W. Thus, the irradiation optical system 211 may be referred to as an energy beam irradiation unit. Specifically, the irradiation optical system 211 is configured to irradiate a target irradiation area EA, which is set on the workpiece W or near the workpiece W as an area that is irradiated with the processing light EL (typically, in which the light is condensed), with the processing light EL. Furthermore, a state of the irradiation optical system 211 is switchable between a state where the target irradiation area EA is irradiated with the processing light EL and a state where the target irradiation area EA is not irradiated with the processing light EL under the control of the control apparatus 7. Note that a direction of the processing light EL emitted from the irradiation optical system 211 is not limited to a direct downward direction (namely, coincident with the -Z-axis direction), and may be a direction that is inclined with respect to the Z-axis by a predetermined angle, for example.

A supply outlet 214 is formed at the material nozzle 212. The material nozzle 212 supplies (for example, injects, jets, blows out or sprays) the build materials M from the supply outlet 214. Thus, the material nozzle 212 may be referred to as a material supply unit. The material nozzle 212 is physically connected to the material supply source 1, which is a supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. Namely, the build materials M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build materials M together with the gas for feeding. Purge gas supplied from the gas supply source 6 is used as the gas for feeding, for example. However, gas supplied from a gas supply source that is different from the gas supply source 6 may be used as the gas for feeding. Note that the material nozzle 212 is illustrated to have a tube-like shape in FIG. 1, however, a shape of the material nozzle 212 is not limited to this shape. The material nozzle 212 supplies the build materials M in a downward direction (namely, toward the -Z side) from the material nozzle 212. The stage 31 is disposed below the material nozzle 212. In a case where the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z-axis by a predetermined angle (as one example, an acute angle), however, it may be the -Z-axis direction (namely, a direct downward direction).

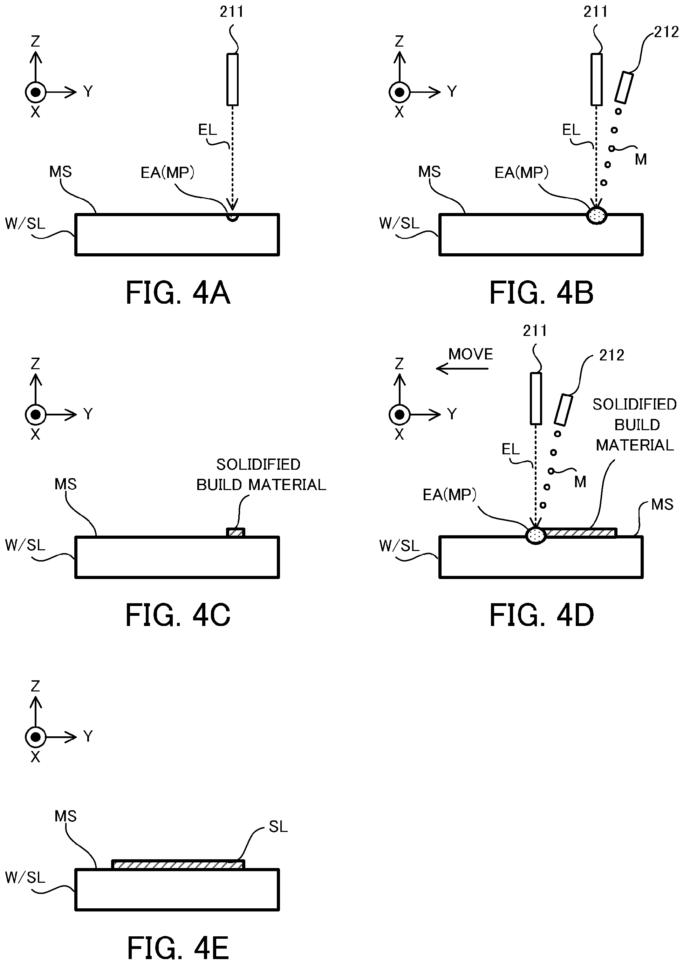

In the present example embodiment, the material nozzle 212 supplies the build materials M to a part that is irradiated with the processing light EL from the irradiation optical system 211. Namely, the material nozzle 212 supplies the build materials M to the target irradiation area EA that is irradiated with the processing light EL by the irradiation optical system 211. Thus, the material nozzle 212 and the irradiation optical system 211 are aligned so that the target irradiation area EAis coincident with (alternatively, is overlapped at least partially with) a target supply area MA that is set on the workpiece W or in a vicinity of the workpiece W as an area to which the material nozzle 212 supplies the build materials M. Note that the material nozzle 212 may supply the build materials M to a melt pool MP (see a below-described FIG. 4) formed by the processing light EL emitted from the irradiation optical system 211. However, the material nozzle 212 may not supply the build materials M to the melt pool MP. For example, the processing system SYS may melt the build materials M by the irradiation optical system 211 before the build materials M from the material nozzle 212 reach the workpiece W and may make the molten build materials M adhere to the workpiece W.

The head driving system 22 is configured to move the processing head 21. The head driving system 22 moves the processing head 21 along at least one of the X-axis, the Y-axis, the Z-axis, the θX direction, the θY direction, and the θZ direction, for example. In an example illustrated in FIG. 2 and FIG. 3, the head driving system 22 moves the processing head 21 along at least one of the X-axis, the Y-axis, and the Z-axis. In this case, the head driving system 22 may include a head driving system 22X, a head driving system 22Y, and a head driving system 22Z. The head driving system 22X moves the processing head along the X-axis. The head driving system 22Y moves the processing head along the Y-axis. The head driving system 22Y moves the processing head along the Y-axis.

The head driving system 22Y includes: a Y guide member 221Y that is connected to a support frame 224, which is disposed on a bottom surface of the housing 8 (alternatively, a surface plate disposed on the bottom surface of the housing 8) through a vibration isolator such as an air spring, and that extends along the Y axis; a Y slide member 222Y that is movable along the Y guide member 221Y; and a non-illustrated motor that moves the Y slide member 222Y The head driving system 22X includes: a X guide member 221X that is connected to the Y slide member 222Y and that extends along the X axis; a X slide member 222X that is movable along the X guide member 221X; and a non-illustrated motor that moves the X slide member 222X. The head driving system 22Z includes: a Z guide member 221Z that is connected to the X slide member 222X and that extends along the Z axis; a Z slide member 222Z that is movable along the Z guide member 221Z; and a non-illustrated motor that moves the Z slide member 222Z. The processing head 21 is connected to the Z slide member 222Z. In a case where the Y slide member 222Y moves along the Y guide member 221Y, the processing head 21 that is connected to the Y slide member 222Y through the head driving systems 22X and 22Z moves along the Y axis. In a case where the X slide member 222X moves along the X guide member 221X, the processing head 21 that is connected to the X slide member 222X through the head driving system 22Z moves along the X axis. In a case where the Z slide member 222Z moves along the Z guide member 221Z, the processing head 21 that is connected to the Z slide member 222Z moves along the Z axis.

In a case where the head driving system 22 moves the processing head 21, a relative position between the processing head 21 and each of the stage 31 and the workpiece W placed on the stage 31 changes. Thus, the head driving system 22 may serve as a position change apparatus that is configured to change the relative positional relationship between the processing head 21 and each of the stage 31 and the workpiece W. Furthermore, in a case where the relative position between the processing head 21 and each of the stage 31 and the workpiece W changes, the target irradiation area EA and the target supply area MA (furthermore, the melt pool MP) relatively moves relative to the workpiece W.

The stage unit 3 includes the stage 31 and a stage driving system 32.

The workpiece W that is the object is placed on the stage 31. Thus, the stage 31 may be referred to as an object placement apparatus. Specifically, the workpiece W is placed on a placement surface 311 that is at least a part of an upper surface of the workpiece W. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. The above described irradiation optical system 211 emits the processing light EL in at least a part of a period during which the workpiece W is placed on the stage 31. Furthermore, the above described material nozzle 212 supplies the build materials M in at least a part of the period during which the workpiece W is placed on the stage 31.

In the present example embodiment, the stage 31 includes a stage 31θX and a stage 31θZ. A reason why the stage 31 includes the stage 31θX and the stage 31θZ is to move the stage 31 along each of the θX direction and the θZ direction by the below described stage driving system 32, as described later in detail. The workpiece W is placed on the stage 31θZ. Thus, at least a part of an upper surface of the stage 31θZ is used as the placement surface 311 on which the workpiece W is placed. The stage 31θX is movable along the θX direction (namely, rotatable around a rotational axis along the X axis) by the stage driving system 32 described later. The stage 31θZ is disposed in a concave part formed at the stage 31θX so as to rotatable around the rotational axis along the X axis together with the stage 31θX due to the rotation of the stage 31θX. The stage 31θZ is disposed in the concave part formed at the stage 31θX so as to movable along the θZ direction (namely, rotatable around a rotational axis along the Z axis) by the stage driving system 32 independently from the rotation of the stage 31θX. Note that a configuration of the stage 31 is not limited to a configuration illustrated in FIG. 2 and FIG. 3. As one example, the stage 31θZ may not be disposed in the concave part formed at the stage 31θX.

The stage driving system 32 is configured to move the stage 31. The stage driving system 32 moves the stage 31 along at least one of the X axis, the Y axis, the Z axis, the θX direction, the θY direction, and the θZ direction, for example. Note that an operation for moving the stage 31 along at least one of the θX direction, the θY direction, and the θZ direction is equivalent to an operation for changing an attitude of a stage 31 (furthermore, an attitude of the workpiece W placed on the stage 31) relative to the processing head 21 by rotating the stage 31 around at least one of a rotational axis along the X axis, a rotational axis along the Y axis, a rotational axis along the Z axis. In the example illustrated in FIG. 2 and FIG. 3, the stage driving system 32 moves the stage 31 along each of the θX direction and the θZ direction. Namely, the stage driving system 32 rotates the stage 31 around the rotational axis along the X axis and rotates the stage 31 around the rotational axis along the Z axis. In this case, the stage driving system 32 may include a stage driving system 32θX and a stage driving system 32θZ. The stage driving system 32θX is configured to rotate the stage 31 (especially, the stage 31θX) around the rotational axis along the X axis. The stage driving system 32θZ is configured to rotate the stage 31 (especially, the stage 31θZ) around the rotational axis along the Z axis. The stage driving system 32θX includes a pair of rotational shafts 321θX that are rotatably connected to a pair of support frames 323, which are disposed on the bottom surface of the housing 8 (alternatively, the surface plate disposed on the bottom surface of the housing 8) through a vibration isolator such as an air spring; and a motor 322θX that is a driving apparatus configured to rotate the pair of the rotational shafts 321θX around the rotational axis along the X axis. The pair of the rotational shafts 321θX extend along the X axis direction. The pair of the rotational shafts 321θX are connected to the stage 31θX so that the stage 31 is between them along the X axis direction. The stage driving system 32θZ includes a rotational shaft 321θZ that extends along the Z axis direction and that is connected to a bottom surface of the stage 31θX (specifically, a surface facing the stage 31θZ); and a motor 322θZ that rotates the rotational shaft 321θZ around the rotational axis along the Z axis. In a case where the pair of the rotational shafts 321θX rotates, the stage 31θX rotates around a rotational axis along the X axis. As a result, the stage 31θZ supported by the stage 31θX (furthermore, the workpiece W supported by the stage 31θZ) also rotates around the rotational axis along the X axis. In a case where the rotational shafts 321θZ rotates, the stage 31θZ (furthermore, the workpiece W supported by the stage 31θZ) also rotates around a rotational axis along the Z axis. Note that the stage 31 illustrated in FIG. 2 and FIG. 3 has a double-sided structure in which stage 31θX is supported from both sides thereof by support frame 323. However, the stage 31 may have a cantilever structure in which the stage 31θX is supported from one side thereof by the support frame 323.

In a case where the stage driving system 32 moves the stage 31, the relative position between the processing head 21 and each of the stage 31 and the workpiece W placed on the stage 31 changes. Thus, the stage driving system 32 may serve as a position change apparatus that is configured to change the relative positional relationship between the processing head 21 and each of the stage 31 and the workpiece W. Furthermore, in a case where the relative position between the processing head 21 and each of the stage 31 and the workpiece W changes, the target irradiation area EA and the target supply area MA (furthermore, the melt pool MP) relatively moves relative to the workpiece W.

The operation for rotating the stage 31 around the rotation axis may be regarded to substantially equivalent to an operation for changing an attitude of the stage 31 (for example, changing a relative attitude of the stage 31 relative to the processing head 21). Thus, the stage driving system 32 may serve as a position changing apparatus for changing the relative positional relationship between the processing head 21 and each of the stage 31 and the workpiece W by changing the relative attitude of the stage 31 relative to the processing head 21.

The measurement apparatus 4 is an apparatus that is configured to measure at least a part of a measurement target object. The measurement apparatus 4 is an apparatus that is configured to measure a characteristic of at least a part of the measurement target object. Specifically, the measurement apparatus 4 is configured to measure, as the characteristic of at least a part of the measurement target object, a shape of at least a part of the measurement target object. Note that the measurement apparatus 4 may be configured to measure, as the characteristic of at least a part of the measurement target object, a position of at least a part of the measurement target object in order to measure the shape of at least a part of the measurement target object. A three-dimensional measurement device (in other words, a 3D scanner) configured to three-dimensionally measure the measurement target object is one example of the measurement apparatus. In this case, the measurement apparatus 4 may measure the measurement target object by using a pattern projection method or a light section method that projects a light pattern on a surface of the measurement target object and measures a shape of the projected pattern. Alternatively, the measurement apparatus 4 may measure the measurement target object by using a time of flight method that performs an operation, which emits a light to the surface of the measurement target object and measures a distance to the measurement target object based on an elapsed time until the emitted light returns, at plurality of positions on the measurement target object. Alternatively, the measurement apparatus 4 may measure the measurement target object by using at least one of a moiré topography method (specifically, a grid irradiation method or a grid projection method), a holography interference method, an auto collimation method, a stereo method, an astigmatism method, a critical angle method and a knife edge method. Note that at least one of the workpiece W, the build object, and the stage 31 is one example of the measurement target object.

The light source 5 is configured to emit at least one of an infrared light, a visible light and an ultraviolet light as the processing light EL, for example. However, other type of light may be used as the processing light EL. The processing light EL may include a plurality of pulsed lights (namely, a plurality of pulsed beams). The processing light EL may be a laser light. In this case, the light source 5 may include semiconductor laser such as a laser light source (for example, a Laser Diode (LD)). The laser light source may be a fiber laser, a CO₂ laser, a YAG laser, an Excimer laser and the like. However, the processing light EL may not be the laser light. The light source 5 may include any light source (for example, at least one of a LED (Light Emitting Diode), a discharge lamp and the like).

The gas supply source 6 is a supply source of purge gas for purging the chamber space 63IN. The purge gas includes inert gas. At least one of Nitrogen gas and Argon gas is one example of the inert gas. The gas supply source 6 supplies the inner space in the housing 8 through a supply pipe 61 that connects the gas supply source 6 and the housing 8. As a result, the chamber space 63IN is a space that is purged by the purge gas. Note that the gas supply source 6 may be a tank that stores the inert gas such as the Nitrogen gas and the Argon gas. In a case where the purge gas is the Nitrogen gas, the gas supply source 6 may be a Nitrogen gas generation apparatus that generates the Nitrogen gas by using air as material.

In a case where the material nozzle 212 supplies the build materials M together with the purge gas as described above, the gas supply source 6 may supply the purge gas to the mix apparatus 12 to which the build materials M are supplied from the material supply source 1. Specifically, the gas supply source 6 may be connected to the mix apparatus 12 through a supply pipe 62 that connects the gas supply source 6 and the mix apparatus 12. As a result, the gas supply source 6 supplies the purge gas to the mix apparatus 12 through the supply pipe 62. In this case, the build materials M from the material supply source 1 may be supplied (specifically, pressure-fed) to the material nozzle 212 through the supply pipe 11 by the purge gas supplied from the gas supply source 6 through the supply pipe 62. Namely, the gas supply source 6 may be connected to the material nozzle 212 through the supply pipe 62, the mix apparatus 12 and the supply pipe 11. In this case, the material nozzle 212 supplies, from the supply outlet 214, the build materials M together with the purge gas for pressure-feeding the build materials M.

The control apparatus 7 is configured to control an operation of the processing system SYS. For example, the control apparatus 7 may control the processing unit 2 (for example, at least one of the processing head 21 and the head driving system 22) of the processing system SYS to perform the additive processing on the workpiece W. For example, the control apparatus 7 may control the stage unit 3 (for example, stage driving system 32) of the processing system SYS to perform the additive processing on the workpiece W. In this manner, in the present example embodiment, the additive processing is performed on the workpiece W by using mainly the processing unit 2 and the stage unit 3. Thus, an apparatus including the processing unit 2 and the stage unit 3 may be referred to as a processing apparatus.

The control apparatus 7 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 7 serves as an apparatus for controlling the operation of the processing system SYS by means of the arithmetic apparatus executing a computer program. The computer program is a computer program that allows the arithmetic apparatus to execute (namely, to perform) a below-described operation that should be executed by the control apparatus 7. Namely, the computer program is a computer program that allows the control apparatus 7 to function so as to make the processing system SYS execute the below-described operation. The computer program executed by the arithmetic apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the arithmetic apparatus may download the computer program that should be executed from an apparatus disposed at an outside of the control apparatus 7 through a network interface.

The control apparatus 7 may control an emitting aspect of the processing light EL by the irradiation optical system 211. The emitting aspect may include at least one of the intensity of the processing light EL and emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control apparatus 7 may control a moving aspect of the processing head 21 by the head driving system 22. The control apparatus 7 may control a moving aspect of the stage 31 by the stage driving system 32. The moving aspect may include at least one of a moving distance, a moving speed, a moving direction and a moving timing (a moving period), for example. Moreover, the control apparatus 7 may control a supply aspect of the build materials M by the material nozzle 212. The supply aspect may include at least one of the supplied amount (especially, the supplied amount per unit time) and a supply timing (a supply period).

The control apparatus 7 may not be disposed in the processing system SYS. For example, the control apparatus 7 may be disposed at the outside of the processing system SYS as a server or the like. In this case, the control apparatus 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802. 1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYS may be configured to transmit and receive various information through the network. Moreover, the control apparatus 7 may be configured to transmit information such as a command and a control parameter to the processing system SYS through the network. The processing system SYS may include a reception apparatus that is configured to receive the information such as the command and the control parameter from the control apparatus 7 through the network. The processing system SYS may include a transmission apparatus that is configured to transmit the information such as the command and the control parameter to the control apparatus 7 through the network (namely, an output apparatus that is configured to output information to the control apparatus 7). Alternatively, a first control apparatus that is configured to perform a part of the arithmetic processing performed by the control apparatus 7 may be disposed in the processing system SYS and a second control apparatus that is configured to perform another part of the arithmetic processing performed by the control apparatus 7 may be disposed at the outside of the processing system SYS.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7. The recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes a partial element of the hardware are combined.

### (2) Operation of Processing system SYS

Next, an operation of the processing system SYS will be described.

### (2-1) Basic Operation of Additive Processing

Firstly, a basic operation of the additive processing performed by the processing system SYS on the workpiece W will be described. The additive processing performed on the workpiece W corresponds to an operation for building the build object so as to add, to the workpiece W, the build object that is integrated with (alternatively, separable from) the workpiece W. In the below-described description, the additive processing for building the three-dimensional structural object ST that is the build object having a desired shape will be described, for the purpose of simple description. As described above, the processing system SYS builds the three-dimensional structural object ST by performing the additive processing based on the Laser Metal Deposition. Thus, the processing system SYS may build the three-dimensional structural object ST by performing the existing additive processing based on the Laser Metal Deposition. Next, one example of the operation for building the three-dimensional structural object ST by using the Laser Metal Deposition will be briefly described.

The processing system SYS builds the three-dimensional structural object ST on the workpiece W based on three-dimensional model data or the like (for example, CAD (Computer Aided Design) data) of the three-dimensional structural object ST that should be built. Measured data of the solid object measured by at least one of a non-illustrated measurement apparatus disposed in the processing system SYS and a three-dimensional shape measurement device disposed separately from the processing system SYS may be used as the three-dimensional model data. The processing system SYS sequentially builds a plurality of layered partial structural objects (it is referred to as the "structural layer" in the below-described description) SL that are arranged along the Z-axis direction in order to build the three-dimensional structural object ST, for example. For example, the processing system SYS sequentially builds, one by one in order, the plurality of structural layers SL based on data related to the plurality of layers that are obtained by slicing the model of the three-dimensional structural object ST along the Z-axis direction. As a result, the three-dimensional structural object ST that is a layered structural body in which the plurality of structural layers SL are layered is built. Next, a flow of an operation for forming the three-dimensional structural object ST by forming the plurality of structural layers SL one by one in order will be described.

Firstly, with reference to FIG. 4A to FIG. 4E, an operation for building each structural layer SL will be described. The processing system SYS moves at least one of the processing head 21 and the stage 31 so that the target irradiation area EA is set at a desired area on the build surface MS that corresponds to the surface of the workpiece W or a surface of the built structural layer SL, under the control of the control apparatus 7. Then, the processing system SYS emits the processing light EL from the irradiation optical system 211 to the target irradiation areas EA. In this case, a condensed plane on which the processing light EL is condensed may be located on the build surface MS in the Z-axis direction. Alternatively, the condensed plane may be away from the build surface MS in the Z-axis direction. As a result, as illustrated in FIG. 4A, the melt pool (namely, a pool of a metal molten by the processing light EL) MP is formed on the build surface MS that is irradiated with the processing light EL. Moreover, the processing system SYS supplies the build materials M from the material nozzle 212 under the control of the control apparatus 7. As a result, the build materials M are supplied to the melt pool MP. The build materials M supplied to the melt pool MP are molten by the processing light EL with which the melt pool MP is irradiated. Alternatively, the build material M supplied from the material nozzle 212 may be molten by the processing light EL before reaching the melt pool MP and molten build material M may be supplied to the melt pool MP. Then, after the melt pool MP is not irradiated with the processing light EL due to the movement of at least one of the processing head 21 and the stage 31, the build materials M molten in the melt pool MP are cooled and solidified (namely, coagulated). As a result, as illustrated in FIG. 4C, the solidified build materials M are deposited on the build surface MS.

The processing system SYS repeats a series of build process including the formation of the melt pool MP by the irradiation with the processing light EL, the supply of the build materials M to the melt pool MP, the melting of the supplied build materials M and the solidification of the molten build materials M while relatively moving the processing head 21 relative to the build surface MS along at least one of the X-axis direction and the Y-axis direction, as illustrated in FIG. 4D. In this case, the processing system SYS irradiates an area on the build surface MS on which the build object should be built with the processing light EL and does not irradiate an area on the build surface MS on which the build object should not be built with the processing light EL. Namely, the processing system SYS moves the target irradiation area EA along a predetermined moving trajectory on the build surface MS and irradiates the build surface MS with the processing light EL at a timing based on an aspect of a distribution of the area on which the build object should be built. As a result, the melt pool MP also moves on the build surface MS along a moving trajectory based on the moving trajectory of the target irradiation area EA. Specifically, the melt pool MP is built in series at a part that is irradiated with the processing light EL in the area along the moving trajectory of the target irradiation area EA on the build surface MS. As a result, as illustrated in FIG. 4E, the structural layer SL that is an aggregation of the build object of the build materials M, which are solidified after being molten, is built on the build surface MS. Namely, the structural layer SL that is an aggregation of the build object built in a pattern based on the moving trajectory of the melt pool MP on the build surface MS (namely, the structural layer SL having a shape based on the moving trajectory of the melt pool MP in a planar view) is built. Incidentally, in a case where the target irradiation area EA is set at the area on which the build object should not be built, the processing system SYS may irradiate the target irradiation areas EA with the processing light EL and stop the supply of the build materials M. Moreover, in a case where the target irradiation areas EA are set at the area on which the build object should not be built, the processing system SYS may supply the build materials M to the target irradiation areas EA and irradiate the target irradiation areas EA with the processing light EL having an intensity by which the melt pool MP is not formed.

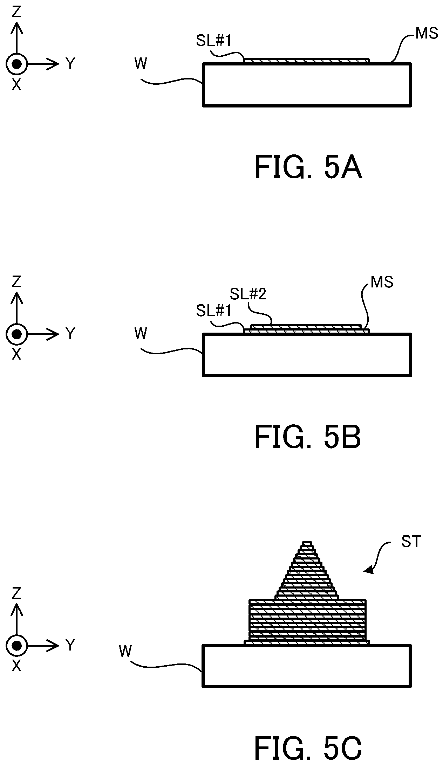

The processing system SYS repeats the operation for building the structural layer SL based on the three-dimensional model data under the control of the control apparatus 7. Specifically, the control apparatus 7 firstly generates slice data by performing a slicing process on the three-dimensional model data by a layer pitch before performing the operation for building the structural layer SL. The processing system SYS performs an operation for building a first structural layer SL#1 on the build surface MS that corresponds to the surface of the workpiece W based on the slice data corresponding to the structural layer SL#1. Specifically, the control apparatus 7 generates processing control information for controlling the processing unit 2 and the stage unit 3 to build the first structural layer SL#1 based on the slice data corresponding to the structural layer SL#1. The processing control information may include processing path information indicating a relative moving trajectory of the target irradiation area EA of the processing light EL on the build surface MS relative to the build surface MS, for example. Then, the control apparatus 7 controls the processing unit 2 and the stage unit 3 to build the first structural layer SL#1 based on the processing path information. As a result, as illustrated in FIG. 5A, the structural layer SL#1 is built on the build surface MS. Note that the processing control information may be generated in advance before the processing system STS starts the additive processing. In this case, the control apparatus 7 may acquire the processing control information generated in advance, and control the processing unit 2 and the stage unit 3 to build the first structural layer SL based on the acquired processing control information. Then, the processing system SYS sets a surface (namely, an upper surface) of the structural layer SL#1 to be a new build surface MS and builds a second structural layer SL#2 on the new build surface MS. In order to build the structural layer SL#2, firstly, the control apparatus 7 controls at least one of the head driving system 22 and the stage driving system 32 so that the processing head 21 moves along the Z-axis direction relative to the stage 31. Specifically, the control apparatus 7 controls at least one of the head driving system 22 and the stage driving system 32 to move the processing head 21 toward the +Z-axis side and / or to move the stage 31 toward the -Z-axis direction so that the target irradiation area EA is set on the surface of the structural layer SL#1 (namely, the new build surface MS). Then, the processing system SYS builds the structural layer SL#2 on the structural layer SL#1 based on the slice data corresponding to the structural layer SL#2, by performing an operation that is the same as the operation for building the structural layer SL#1 under the control of the control apparatus 7. As a result, as illustrated in FIG. 5B, the structural layer SL#2 is built. Then, the same operation is repeated until all structural layers SL constituting the three-dimensional structural object ST that should be built on the workpiece W are built. As a result, the three-dimensional structural object ST is built by a layered structural object in which the plurality of structural layers SL are layered, as illustrated in FIG. 5C.

### (2-2) Additive Processing on Plurality of Workpieces W

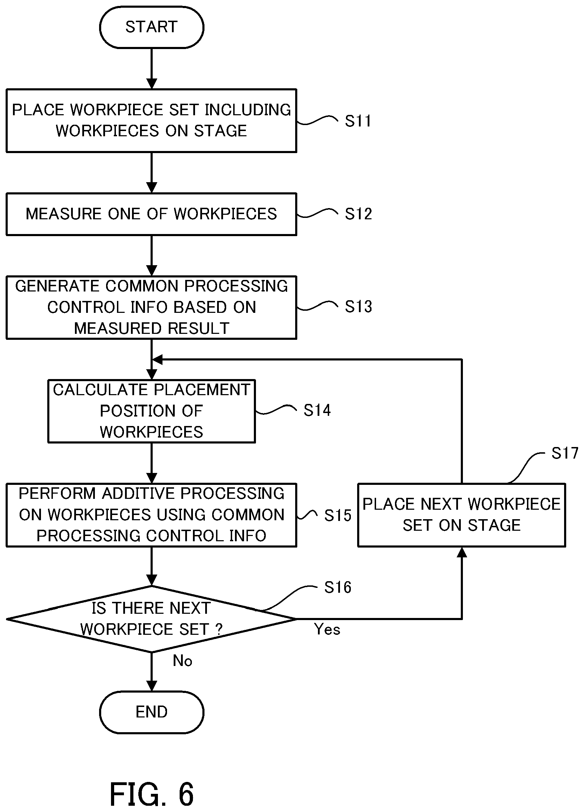

In the present example embodiment, a plurality of workpieces W may be placed on the stage 31. In this case, the processing system SYS may perform the additive processing on the plurality of workpieces W. Next, with reference to FIG. 6, an operation for performing the additive processing on the plurality of workpieces W will be described. FIG. 6 is a flowchart that illustrates a flow of the operation for performing the additive processing on the plurality of workpieces W.

As illustrated in FIG. 6, firstly, the plurality of workpieces W are placed on the stage 31 (a step S11). Incidentally, in the below-described description, a set of the plurality of workpieces W placed on the stage 31 is referred to as a "workpiece set WS".

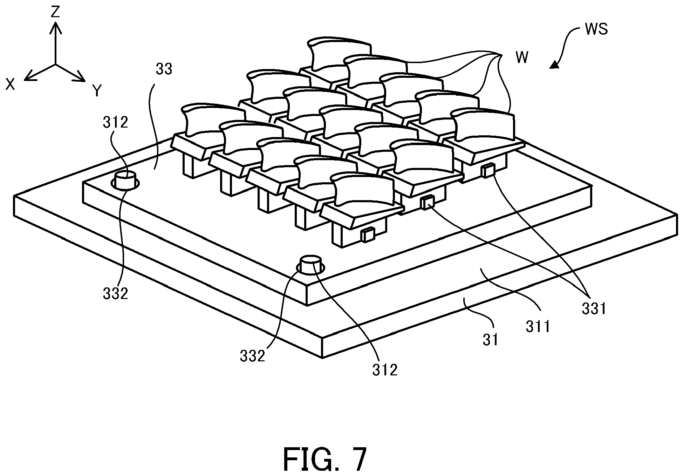

FIG. 7 illustrates one example of the plurality of workpieces W placed on the stage 31. Note that FIG. 7 illustrates an example in which each of the plurality of workpieces W is a turbine blade. However, each of the plurality of workpieces W is not limited to the turbine blade. As illustrated in FIG. 7, the plurality of workpieces W may be placed on a placement surface 311 of the stage 31 through the jig 33. Specifically, the plurality of workpieces W are placed on the jig 33. In this case, placement positions at which the plurality of workpieces W are placed on the jig 33 may be determined in advance. In other words, the plurality of workpieces W may be placed at a position that is determined in advance on the jig 33. In a case where the placement positions on the jig 33 at which the plurality of workpieces W are placed are determined in advance, placement position information related to the placement positions of the plurality of workpieces W on the jig 33 may be information that is known to the control apparatus 7. However, the plurality of workpieces W may be placed at any position on the jig 33. The jig 33 on which the plurality of workpieces W are placed may be placed on the placement surface 311 of the stage 31. However, the plurality of workpieces W may be placed on the placement surface 311 of the stage 31 without the jig 33.

The jig 33 may hold the plurality of workpieces W that are placed on the jig 33. For example, the jig 33 may hold the plurality of workpieces W by clamping each workpiece W by using fixing jaws 331. In this case, the placement positions at which the plurality of workpieces W are placed on the jig 33 (namely, holding position at which the jig 33 holds the plurality of workpieces W) are determined based on a position at which the fixing jaws 331 are disposed. However, the jig 33 may not hold the plurality of workpieces W. The plurality of workpieces W may be placed on the jig 33 without clamp.

The jig 33 may be placed at a predetermined position on the placement surface 311 of the stage 31. However, the jig 33 may be placed at any position on the placement surface 311 of the stage 31. In order to place the jig 33 at the determined position on the placement surface 311, at least one of the jig 33 and the placement surface 311 may have a marker for a position adjustment. In an example illustrated in FIG. 7, the marker for the position adjustment is formed in both of the jig 33 and the placement surface 311.

For example, as illustrated in FIG. 7, a plurality of pins 312 may be formed on the placement surface 311 as the markers for the position adjustment. In the example illustrated in FIG. 7, two pins 312 are formed on the placement surface 311, however, three or more pins 312 may be formed. The pin 312 is a member that projects from the placement surface 311 along the Z-axis direction. Note that information related to positions of the pins 312 on the stage 31 may be information that is known to the control apparatus 7. Furthermore, as illustrated in FIG. 7, a plurality of through-holes 332 may be formed in the jig 33 as the markers for the position adjustment. In the example illustrated in FIG. 7, two through-holes 332 are formed in the jig 33, however, three or more through-holes 332 may be formed. The through-hole 332 penetrates the jig 33 along the Z-axis direction. In this case, as illustrated in FIG. 7, the jig 33 may be placed on the placement surface 311 so that the pins 312 are inserted into the through-holes 332. The jig 33 may be placed on the placement surface 311 in a state where the pins 312 are inserted into the through-holes 332. Therefore, an arrangement aspect of the through-holes 332 is identical to an arrangement aspect of the pins 312. Furthermore, the number of through-holes 332 is equal to (alternatively, may be larger than) the number of pins 312. As a result, the jig 33 is placed at the position determined by the pins 312 and the through-holes 332 on the placement surface 311. Therefore, in this case, the placement position information related to the placement position of the jig 33 on the stage 31 is known to the control apparatus 7.

In the present example embodiment, the plurality of workpieces W placed on the stage 31 have the same characteristics. The characteristic of the workpiece W may include a type of material of the workpiece W and a shape of the workpiece W. For example, a plurality of turbine blades having the same characteristics described above are attached to the turbine. In this case, a part of the plurality of turbine blades may be placed on the stage 31 as the plurality of workpieces W.

A state in which "the plurality of workpieces W have the same characteristics" may include not only a state in which "the plurality of workpieces W have exactly the same characteristics" but also a state in which "the plurality of workpieces W have generally the same characteristics". The state in which "the plurality of workpieces W have generally the same characteristics" may include "a state in which at least two of the plurality of workpieces W have different characteristics, but a difference between the characteristics of the at least two workpieces W is equal to or smaller than a characteristic allowable value". Specifically, for example, the state in which "the plurality of workpieces W have generally the same shape" may include "a state in which at least two of the plurality of workpieces W have different shapes, but the difference between the shapes of the at least two workpieces W is equal to or smaller than a shape allowable value". Moreover, A state in which "the plurality of workpieces W have the same characteristics" may include a state in which "at least some of the plurality of workpieces W have the same characteristics". For example, the state in which "the plurality of workpieces W have the same shape" may include a state in which "at least some of the plurality of workpieces W have the same shape as each other".

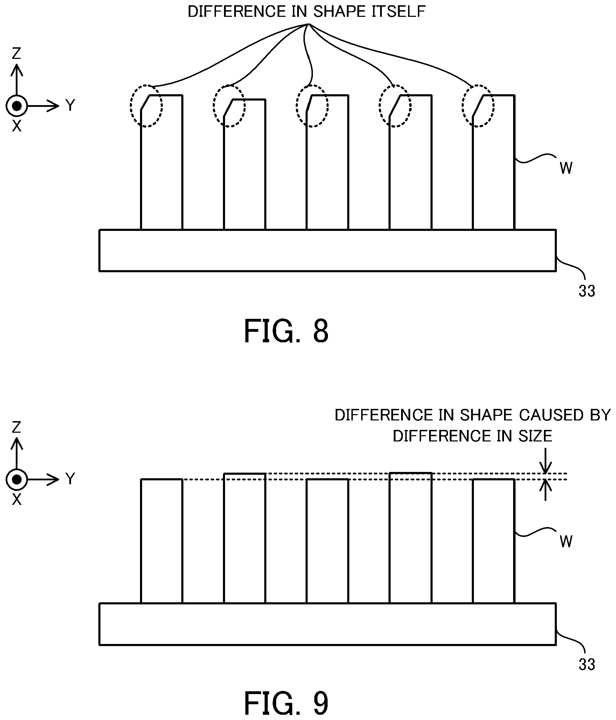

The state in which at least two workpieces W have different shapes may include a state in which the shapes of at least two workpieces W themselves are different from each other, as illustrated in FIG. 8 that illustrates the plurality of workpieces placed on the stage. The state in which the shapes of at least two workpieces W are different from each other may include a state in which the shapes of at least two workpieces W are different from each other due to different sizes of at least two workpieces W, as illustrated in FIG. 9 that illustrates the plurality of workpieces placed on the stage. Therefore, "the shape of the workpiece W" in the present example embodiment may mean the shape of the workpiece W including the size of workpiece W. Note that the state in which the shapes of at least two workpieces W are different from each other may include a state in which some of the plurality of workpieces W have the same shape as each other. The state in which the shapes of at least two workpieces W are different from each other may include a state in which some of the plurality of workpieces W have different shapes from each other. The state in which the shapes of the at least two workpieces W are different from each other may include a state in which some of the plurality of workpieces W have different shapes from each other while others of the plurality of workpieces W have the same shape from each other.

As described above, the turbine blade included in the turbine may be used as the example of the workpiece W. The turbine blade is typically attached to a rotor that is included in the turbine and that is rotatable around a rotational axis. Typically, a plurality of turbine blades having the same characteristics are attached to the rotor. However, as the turbine is used, friction between fluid and the turbine blades causes the turbine blades to wear. As a result, there is a possibility that at least two of the turbine blades, which had the same characteristics before the turbine was started to be used, have the different characteristics (in particular, shapes) due to turbine use. However, even in this case, there is a high possibility that wear amounts are generally the same between the plurality of turbine blades. As a result, the characteristics of at least two of the plurality of turbine blades, which had the same characteristics before the turbine was started to be used, may be regarded to be generally the same, albeit strictly different, even after the turbine is started to be used. In the present example embodiment, the plurality of turbine blades including at least two turbine blades that have generally the same characteristics may be placed on stage 31 as the plurality of workpieces W.

Incidentally, in a case where the plurality of worn turbine blades are placed on the stage 31 as the plurality of workpieces W, the plurality of workpieces W (namely, the plurality of worn turbine blades) may be regarded to be items that need to be repaired having a missing part. The missing part corresponds to a worn part. In this case, the processing system SYS may perform the additive processing on the workpiece W to build the build object for filling in the missing part of workpiece W (the worn part of the turbine blade) that is item that needs to be repaired. Namely, the processing system SYS may perform a repair processing for repairing the workpiece W to fill in the missing part of the workpiece W with the build object. For example, the processing system SYS may process (namely, repair) the workpiece W so as to fill in the missing part of the workpiece W by performing the additive processing to add, to the missing part of the workpiece W, the build object having the same characteristic (for example, the type of the material and the shape) as the characteristic of the missing part of the workpiece W.

A pre-processing process may be performed on at least one of the plurality of workpieces W placed on the stage 31. For example, the pre-processing process may be performed on at least one of the plurality of workpieces W before the plurality of workpieces W are placed on the stage 31. Namely, the pre-processing process may be performed on at least one of the plurality of workpieces W that is not placed on the stage 31. For example, the pre-processing process may be performed on at least one of the plurality of workpieces W after the plurality of workpieces W are placed on the stage 31. Namely, the pre-processing process may be performed on at least one of the plurality of workpieces W placed on the stage 31.

The pre-processing process may include a first pre-processing process for processing at least one of the plurality of workpieces W so that the characteristics of the plurality of workpieces W are generally the same. For example, in a case where the plurality of workpieces W include at least two workpieces W between which the difference in shape is not equal to or smaller than the shape allowable value, the first pre-processing process may include a process for processing at least one workpiece W the difference in shape between the at least two workpieces W, which was not equal to or smaller than the shape allowable value, is equal to or smaller than the shape allowable value. The first pre-processing process typically includes a removal processing process for removing a part of at least one workpiece W so that the characteristics of the plurality of workpieces W are generally the same. The removal processing process may include a process for removing a part of at least one workpiece W by using a tool such as a grinder. The removal processing process may include a process for removing a part of at least one workpiece W by irradiating at least one workpiece W with an energy beam. However, the first pre-processing process may include an additive processing process for adding the build object to at least one workpiece W so that the characteristics of the plurality of workpieces W are generally the same.

The pre-processing process may include a second pre-processing process for processing at least one of the plurality of workpieces W so that a surface of at least one of the plurality of workpieces W (especially, a surface part that is set as the build surface MS on which the build object is built by the additive processing) becomes flatter than the surface before the pre-processing process is performed . In this case, in a case where the additive processing is performed on the workpiece W on which the second pre-processing process is performed, it is possible to build the build object more tightly bonded to the workpiece W, compared to a case where the additive processing is performed on the workpiece W on which the second pre-processing process is not performed. The second pre-processing process typically includes a removal processing process for removing a part of at least one workpiece W so that the surface of the at least one workpiece W is relatively flat. Note that a description of the removal processing itself is omitted, because it is already described when the first pre-processing process is described. However, the second pre-processing process may include an additive processing process for adding the build object to at least one workpiece W so that the surface of the at least one workpiece W becomes relatively flat.

The processing system SYS may include an apparatus configured to perform the pre-processing process. For example, the processing system SYS may include, as the apparatus configured to perform the pre-processing process, an apparatus configured to remove a part of at least one workpiece W by using the tool such as the grinder. For example, the processing system SYS may include, as the apparatus configured to perform the pre-processing process, an apparatus configured to remove a part of at least one workpiece W by irradiating the at least one workpiece W with the energy beam. Note that the processing light EL may be used as the energy beam for performing the removal processing. In this case, the processing system SYS may use the processing unit 2 as the apparatus configured to perform the pre-processing process. Alternatively, an apparatus external to the processing system SYS may perform the pre-processing process on at least one workpiece W.

Again In FIG. 6, the measurement apparatus 4 performs a measurement operation for measuring the shape of one of the workpieces W placed on the stage 31 under the control of the control apparatus 7 (a step S12). Incidentally, in the below-described description, the workpiece W measured at the step S12 is referred to as a "measurement target workpiece W".

Then, the control apparatus 7 generates the processing control information for performing the additive processing on the measurement target workpiece W based on a result of the measurement operation at the step S12 (namely, a measured result of the shape of the measurement target workpiece W) (a step S13). Namely, the control apparatus 7 generates the processing control information for controlling the processing unit 2 and the stage unit 3 to build the build object on the measurement target workpiece W based on the result of the measurement operation at the step S12 (the step S13).

The control apparatus 7 may generate the processing control information based on the result of the measurement operation at the step S12 and shape information related to a shape that the measurement target workpiece W should have after the additive processing is performed (namely, a shape that the measurement target workpiece W should have after the build object is added thereto, and a shape that an object including the build object and the measurement target workpiece W should have). Specifically, the control apparatus 7 may generate a three-dimensional model (in the below-described description, it is referred to as a "measurement model") indicating an actual shape of the measurement target workpiece W based on the result of the measurement operation at the step S12. Furthermore, the control apparatus 7 may acquire a three-dimensional model (in the below-described description, it is referred to as a "target model") indicating the shape that the measurement target workpiece W should have after the additive processing is performed, as the shape information related to the shape that the measurement target workpiece W should have after the additive processing is performed. The control apparatus 7 may acquire the target model stored in the storage apparatus of the control apparatus 7, or may acquire the target model stored in an apparatus external to the processing system SYS. A difference between the target model and the measurement model corresponds to a three-dimensional model (in the below-described description, it is referred to as a "build model") indicating a shape of the build object that should be built by the processing system SYS performing the additive processing (hereinafter referred to as the "build model"). Therefore, the control apparatus 7 may generate the processing control information based on the difference between the target model and the measurement model. Namely, the control apparatus 7 may generate the processing control information based on a comparison result between the target model and the measurement model.

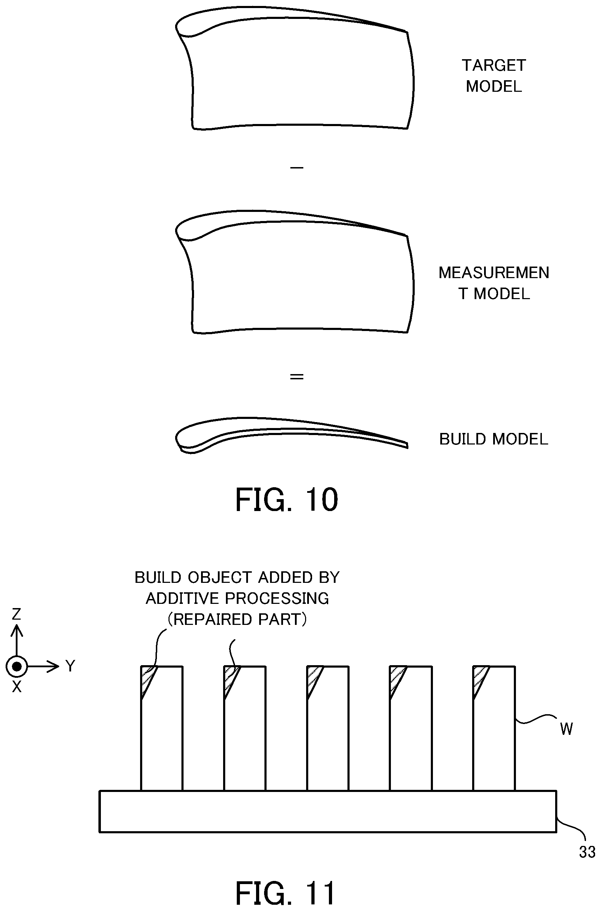

As one example, in a case where the item including the missing part that needs to be repaired is used as the workpiece W as described above, the control apparatus 7 may generate the processing control information for controlling the processing unit 2 and the stage unit 3 to perform the additive processing to add, to the measurement target workpiece W, the build obj ect for filling in the missing part of the measurement target workpiece W. In this case, the control apparatus 7 may generate the measurement model based on the result of the measurement operation at the step S12. Furthermore, the control apparatus 7 may acquire the target model (namely, the three-dimensional model indicating the shape that the measurement target workpiece W should have after the repair processing is performed (namely, the shape of the measurement target workpiece W after repair). A three-dimensional model indicating a designed shape of the measurement target workpiece W (typically, the shape of the measurement target workpiece W in which there is not missing part) may be used as the target model. Alternatively, a three-dimensional model indicating the shape obtained by modifying the design shape of the measurement target workpiece W (for example, a shape modified to improve functionality of the measurement target workpiece W compared to the design shape of the workpiece W) may be used as the target model. Note that FIG. 10 schematically illustrates one example of each of the measurement model and target model. Then, the control apparatus 7 may generate the three-dimensional model (namely, the build model) indicating the shape of the missing part of the measurement target workpiece W by comparing the target model and the measurement model (typically, calculating the difference between the target model and the measurement model), as illustrated in FIG. 10. Then, the control apparatus 7 may generate the processing control information to build the build object indicated by the build model.

However, in addition to or instead of acquiring the target model and generating the measurement model, the control apparatus 7 may acquire shape information (for example, the build model described above) related to the shape of the build object that should be built by the processing system SYS performing the additive processing and generate the processing control information based on the acquired shape information. In this case, the control apparatus 7 may not acquire the target model and may not generate the measurement model.

Incidentally, in addition to or instead of the measurement apparatus 4 of the processing system SYS, a measurement apparatus external to the processing system SYS may perform the measurement operation for measuring the shape of the measurement target workpiece W. In this case, the control apparatus 7 may acquire, from the external measurement apparatus, information related to the measured result of the measurement operation performed by the external measurement apparatus and generate the processing control information based on the acquired information.

In the present example embodiment, the processing control information for performing the additive processing on the measurement target workpiece W is diverted as the processing control information for performing the additive processing on the remaining workpiece W other than the measurement target workpiece W among the plurality of workpieces W. Namely, the processing control information for performing the additive processing on the measurement target workpiece W is used as common processing control information for performing the additive processing on each of the plurality of workpieces W. This is because the plurality of workpieces W placed on the stage 31 have the same characteristic (even in a case where the characteristics of at least two workpieces W are different from each other, the difference in the characteristic of the at least two workpieces W is equal to or smaller than the characteristic allowable value) as described above, and thus, the processing control information for performing the additive processing on one workpiece W is usable as the processing control information for performing the additive processing on another workpiece W that is different from the one workpiece W. Thus, in the present example embodiment, the processing control information generated based on the result of the measurement operation for measuring the shape of the measurement target workpiece W is referred to as "common processing control information".

Then, the processing system SYS performs an alignment operation for calculating the placement positions at which the plurality of workpieces W are placed on the stage 31 (a step S14). For example, in a case where the placement position information related to the placement positions of the plurality of workpieces W on the jig 33 and the placement position information related to the placement position of the jig 33 on the stage 31 are the information known to the control apparatus 7 as described above, the control apparatus 7 may calculate the placement position of the plurality of workpieces W on the stage 31 based on the placement position information.

Alternatively, in a case where the placement position information is not known to the control apparatus 7, the measurement apparatus 4 may measure the positions of the plurality of workpieces W, and the control apparatus 7 may calculate the placement position of the plurality of workpieces W on the stage 31 based on a measured result of the positions of the plurality of workpieces W by the measurement apparatus 4. Specifically, the measurement apparatus 4 may measure the shape of the plurality of workpieces W together with a fiducial member, wherein information related to a position of the fiducial member relative to the stage 31 is known to the control apparatus 7. For example, the pin 312 illustrated in FIG. 7 may be used as the fiducial member whose position relative to the stage 31 is known, or any other member formed on the stage 31 may be used. Then, the control apparatus 7 may calculate the placement position of the plurality of workpieces W on the stage 31 based on a measured result of the plurality of workpieces W and the fiducial member by the measurement apparatus 4. Specifically, the control apparatus 7 may determine a positional relationship between the fiducial member and the plurality of workpieces W based on the measured result of the plurality of workpieces W and the fiducial member by the measurement apparatus 4, and may calculate the placement position of the plurality of workpieces W on the stage 31 based on the information related to the position of the fiducial member relative to the stage 31 and the determined positional relationship. Incidentally, since the measurement apparatus 4 measures the shapes of the plurality of workpieces W to perform the alignment operation while the measurement apparatus 4 measures the shape of a single workpiece W to generate the common processing control information, a measurement characteristic of the measurement apparatus 4 that performs the measurement operation to perform the alignment operations may be different from a measurement characteristic of the measurement apparatus 4 that performs the measurement operation to generate the common processing control information. The measurement characteristic may include a size of a measurement field of view (namely, an area that can be measured by the measurement apparatus 4). For example, the measurement field of view of the measurement apparatus 4 that performs the measurement operation to perform the alignment operation may be larger than the measurement field of view of the measurement apparatus 4 that performs the measurement operation to generate the common processing control information. The measurement characteristic may include a measurement resolution of the measurement apparatus 4 (namely, a measurement accuracy, an a limit value of fineness of an object that can be measured by the measurement apparatus 4). For example, the measurement resolution of the measurement apparatus 4 that performs the measurement operation to perform the alignment operation may be lower (namely, worse) than the measurement resolution of the measurement apparatus 4 that performs the measurement operation to generate the common processing control information. In other words, the measurement accuracy of the measurement apparatus 4 that performs the measurement operation to perform the alignment operation may be lower than the measurement accuracy of the measurement apparatus 4 that performs the measurement operation to generate the common processing control information.

Then, the control apparatus 7 controls the processing unit 2 and the stage unit 3 to perform the additive processing on the plurality of workpieces W based on the common processing control information generated at the step S13 (a step S15). Namely, the processing system SYS performs the additive processing on the plurality of workpieces W based on the common processing control information generated at the step S13 (the step S15). Specifically, the control apparatus 7 may control the processing unit 2 and the stage unit 3 to perform the additive processing on the measurement target workpiece W based on the common processing control information. Furthermore, the control apparatus 7 may control the processing unit 2 and the stage unit 3 to perform the additive processing on the remaining workpiece W other than the measurement target workpiece W among the plurality of workpieces W based on the common processing control information. In the below-described description, the workpiece W that is different from the measurement target workpiece W is referred to as a "non-measurement target workpiece W". In this case, the control apparatus 7 may calculate the positional relationship between the measurement target workpiece W and the non-measurement target workpiece W based on the placement positions of the plurality of workpieces W calculated at the step S14, and control the processing unit 2 and the stage unit 3 to perform the additive processing on the non-measurement target workpiece W based on the calculated positional relationship and the common processing control information. Stage unit 3 may be controlled. As one example, as described above, the processing control information may include the processing path information indicating the relative moving trajectory of the target irradiation area EA of the processing light EL on the build surface MS. Since the characteristics (especially, the shapes) of the plurality of workpieces W are the same as described above (especially, even in a case where the characteristics of the plurality of workpieces W are different from each other, the difference therebetween is equal to or smaller than the characteristic allowable value), the moving trajectory of the target irradiation area EA for performing the additive processing on the non-measurement target workpiece W is away from the moving trajectory of the target irradiation area EA for performing the additive processing on the measurement target workpiece W along the build surface MS by an amount corresponding to the difference between the placement position of the non-measurement target workpiece W and the placement position of the measurement target workpiece W. Thus, the control apparatus 7 may correct the common processing control information based on the difference between the placement position of the measurement target workpiece W and the placement position of the non-measurement target workpiece W, and control the processing unit 2 and the stage unit 3 to perform the additive processing on the non-measurement target workpiece W based on the corrected common processing control information. Alternatively, the control apparatus 7 may correct, based on the difference between the placement position of the measurement target workpiece W and placement position of the non-measurement target workpiece W, a control amount of the processing unit 2 and the stage unit 3 based on the common processing control information.

In a case where the processing system SYS performs the additive processing on the plurality of workpieces W by using the common processing control information in this manner, the processing system SYS processes the plurality of workpieces W in the same manner. Even in this case, since the characteristics (especially, the shapes) of the plurality of workpieces W are the same (especially, even in a case where the characteristics of the plurality of workpieces W are different from each other, the difference therebetween is equal to or smaller than the characteristic allowable value) as described above, the processing system SYS is capable of appropriately performing the additive processing on the plurality of workpieces W by using the common processing control information. As a result, as illustrated in FIG. 11 that illustrates the plurality of workpieces W on which the additive processing has been performed (for example, the plurality of workpieces W that have been repaired), the characteristics of the plurality of workpieces W on which the additive processing has been performed are also the same (especially, even in a case where the characteristics of the plurality of workpieces W are different from each other, the difference therebetween is equal to or smaller than the characteristic allowable value). For example, as illustrated in FIG. 11, the shapes of the plurality of workpieces W on which the additive processing has been performed may be the same. For example, as illustrated in FIG. 11, the sizes of the plurality of workpieces W on which the additive processing has been performed may be the same. As one example, in a case where the plurality of worn turbine blades are placed on the stage 31 as the plurality of workpieces W, the processing system SYS is capable of performing the additive processing on the plurality of workpieces W (namely, the plurality of turbine blades that are worn) to repair the plurality of workpieces W so that the missing parts (worn parts of the turbine blades) are filled in by the build object (namely, manufacturing the plurality of turbine blades that are not worn).

Then, after completing the additive processing on the workpiece set WS including the plurality of workpieces W placed on the stage 31, the control apparatus 7 determines whether or not there is a new workpiece set WS (namely, a next workpiece set WS) including the plurality of workpieces W on which the processing system SYS should newly perform the additive processing (a step S16). Namely, the control apparatus 7 determines whether or not there is the new workpiece set WS including the plurality of workpieces W on which the processing system SYS has not yet performed the additive processing (the step S16).

In the present example embodiment, the characteristic of each of the plurality of workpieces W included in the new workpiece set WS may be the same as the characteristic of each of the plurality of workpieces W included in the already-processed workpiece set WS. Note that a state in which "the characteristic of one workpiece W is the same as the characteristic of another workpiece W (namely, one workpiece W and another workpiece W have the same characteristics)" has already been described, so the description thereof is omitted here.

As a result of the determination at the step S16, in a case where it is determined that there is the new workpiece set WS on which the processing system SYS should perform the additive processing (the step S16: Yes), the plurality of workpieces W included in the new workpiece set WS are placed on the stage 31 (a step S17). Then, the processing system SYS performs the operations from the step S14 to the step S15 on the plurality of workpieces W placed on the stage 31 at the step S17. Namely, the processing system SYS performs the alignment operation for calculating the placement positions of the plurality of workpieces W placed on the stage 31 at the step S17 (the step S14), and performs the additional processing on the plurality of workpieces W placed on the stage 31 at the step S17 based on the common processing control information generated at the step S13 (the step S15). In this case, as long as the characteristic of each of the plurality of workpieces W included in the new workpiece set WS is the same as the characteristic of the plurality of workpieces W included in the already-processed workpiece set WS, the control apparatus 7 may not generate new processing control information for performing the additive processing on the plurality of workpieces W included in the new workpiece set WS. Namely, the control apparatus 7 may control the processing unit 2 and the stage unit 3 to perform the additive processing on the unprocessed workpiece W based on the common processing control information used to perform the additive processing on the already-processed workpiece W.

On the other hand, as a result of the determination at the step S16, in a case where it is determined that there is not the new workpiece set WS on which the processing system SYS should perform the additive processing (the step S16: No), the processing system SYS terminates the operation illustrated in FIG. 6.

### (3) Technical Effectiveness

As described above, in the present example embodiment, the processing system SYS is capable of performing , by using the processing control information for performing the additive processing on the measurement target workpiece W, the additive processing not only on the measurement target workpiece W but also on the non-measurement target workpiece W. Therefore, the processing system SYS does not need to measure the shape of the non-measurement target workpiece W and generate the processing control information for performing the additive processing on the non-measurement target workpiece W based on the measured result of the non-measurement target workpiece W. Namely, the processing system SYS does not need to measure all of the plurality of workpieces W individually and generate, based on the measured result of the plurality of workpieces W, the plurality of processing control information for performing the additive processing on the plurality of workpieces W, respectively,. Thus, the processing system SYS is capable of reducing a time required for the additive processing of the plurality of workpieces W, compared to a processing system in a comparative example that needs to measure all of the plurality of workpieces W individually and generate, based on the measured result of the plurality of workpieces W, the plurality of processing control information for performing the additive processing on the plurality of workpieces W, respectively.

### (4) Modified Example

Next, a modified example of the operation for performing the additive processing on the plurality of workpieces W will be described.

### (4-1) First Modified Example

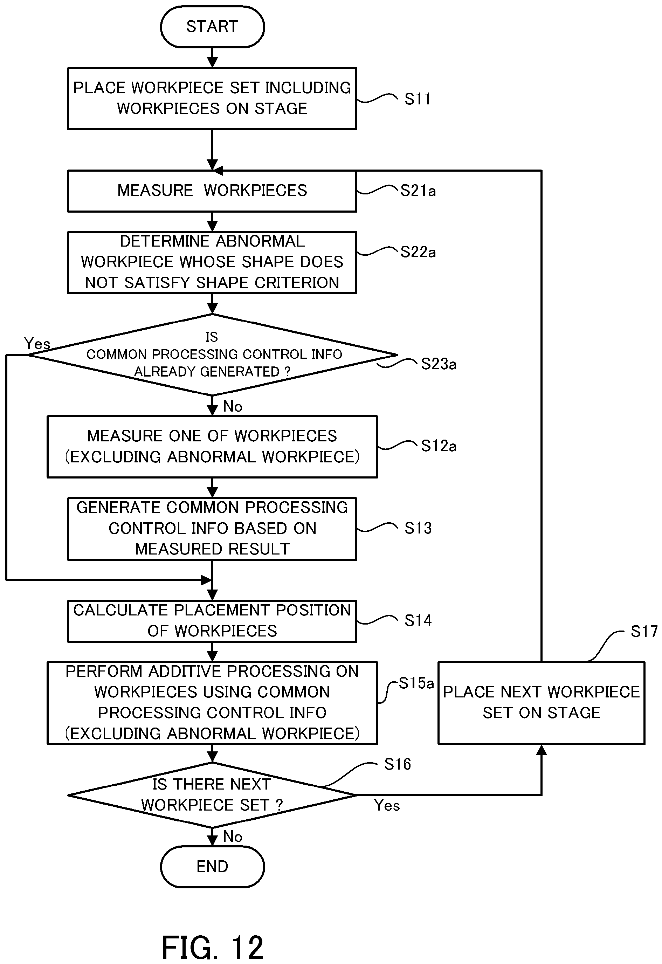

Firstly, with reference to FIG. 12, a first modified example of the operation for performing the additive processing on the plurality of workpieces W will be described. FIG. 12 is a flowchart that illustrates a flow of the first modified example of the operation for performing the additive processing on the plurality of workpieces W. Note that a detailed description of the operation that has already been described is omitted by assigning the same step numbers thereto.

As illustrated in FIG. 12, the plurality of workpieces W are placed on the stage 31 even in the first modified example (the step S11). Then, in the first modified example, the measurement apparatus 4 performs a measurement operation for measuring the shapes of the plurality of workpieces W (a step S21a). Then, the control apparatus 7 identifies at least one workpiece W whose shape does not satisfy a predetermined shape criterion from among the plurality of workpieces W based on the result of the measurement operation at the step S21a (namely, the measured result of the plurality of workpieces W) (a step S22a). The predetermined shape criterion may include such a criterion that a difference between the shape of one workpiece W and the shape of another workpiece W is equal to or smaller than a shape allowable value. Namely, the predetermined shape criterion may include such a criterion that the shape of one workpiece W is the same as the shape of another workpiece W. In this case, the control apparatus 7 may identify, as the workpiece W whose shape does not satisfy the predetermined shape criterion, one workpiece W having a shape a difference of which from the shape of another workpiece W is larger than the shape allowable value. The control apparatus 7 may identify, as the workpiece W whose shape does not satisfy the predetermined shape criterion, one workpiece W having a shape that is not the same as the shape of another workpiece W. In the below-described description, the workpiece W whose shape does not satisfy the predetermined shape criterion is referred to as an "abnormal workpiece W", while the workpiece W whose shape satisfies the predetermined shape criterion is referred to as a "normal workpiece W", to distinguish both from each other.

As described above, the "shape of the workpiece W" in the present example embodiment may mean the shape of the workpiece W in consideration of the size of the workpiece W. In this case, the predetermined shape criterion may include such a criterion that the difference between the size of one workpiece W and the size of another workpiece W is equal to or smaller than a size allowable value. Namely, the predetermined shape criterion may include such a criterion that the size of one workpiece W is the same as the size of another workpiece W. In this case, the control apparatus 7 may identify, as the workpiece W whose shape does not satisfy the predetermined shape criterion, one workpiece W having a size a difference of which from the size of another workpiece W is larger the size allowable value. The control apparatus 7 may identify, as the workpiece W whose shape does not satisfy the predetermined shape criterion, one workpiece W having a size that is not equal to the size of another workpiece W.

Since the measurement apparatus 4 measures the shapes of the plurality of workpieces W to identify the abnormal workpieces W while the measurement apparatus 4 measures the shape of the single workpiece W to generate the common processing control information, the measurement characteristic of the measurement apparatus 4 performing the measurement operation for identifying the abnormal workpieces W may be different from the measurement characteristic of the measurement apparatus 4 performing the measurement operation for generating the common processing control information. As described above, the measurement characteristic may include at least one of the measurement field of view and the measurement resolution of the measurement apparatus 4. In this case, the measurement field of view of the measurement apparatus 4 performing the measurement operation for identifying the abnormal workpiece W may be wider than the measurement field of view of the measurement apparatus 4 performing the measurement operation for generating the common processing control information. The measurement resolution of the measurement apparatus 4 performing the measurement operation for identifying the abnormal workpiece W may be worse than the measurement resolution of the measurement apparatus 4 performing the measurement operation for generating the common processing control information. Namely, the measurement accuracy of the measurement apparatus 4 performing the measurement operation for identifying the abnormal workpiece W may be lower than the measurement accuracy of the measurement apparatus 4 performing the measurement operation for generating the common processing control information. In the below-described description, for convenience of description, an example in which the measurement apparatus 4 measures the shape of the measurement target workpiece W in a fine state having a relatively narrower measurement field of view and a relatively higher measurement resolution (namely, a relatively high measurement accuracy) to generate the common processing control information and the measurement apparatus 4 measures the shape of the measurement target workpiece W in a rough state having a relatively wider measurement field of view and a relatively lower measurement resolution (namely, a relatively low measurement accuracy) compared to the fine state to identify the abnormal workpiece W. In this case, the measurement operation for generating the common processing control information is referred to as a fine measurement operation, while the measurement operation for identifying the abnormal workpiece W is referred to as a rough measurement operation to distinguish both from each other. Note that the measurement operation for perform the alignment operation described with reference to FIG. 6 may be performed by the measurement apparatus 4 in the rough state.

Then, the control apparatus 7 determines whether or not the common processing control information, which is usable to perform the additive processing on the plurality of workpieces W placed on the stage 31, has been already generated (a step S23a).

As a result of the determination at the step S23a, in a case where it is determined that the common processing control information has not been generated (the step S23a: No), the control apparatus 7 generates the common processing control information. Specifically, the measurement apparatus 4 performs the measurement operation for measuring the shape of the measurement target workpiece W, which is one of the workpieces W placed on the stage 31, under the control of the control apparatus 7 (a step S12a). However, the step S12a in the first modified example is different from the step S12 in above-described FIG. 6 in that the measurement apparatus 4 does not measure the shape of the abnormal workpiece W identified at the step S22a as the shape of the measurement target workpiece W. Namely, the step S12a in the first modified example is different from the step S12 in above-described FIG. 6 in that the measurement apparatus 4 measures the shape of the normal workpiece W, which is not identified as the abnormal workpiece W at the step S22a, as the shape of the measurement target workpiece W. Another feature of the step S12a in the first modified example may be the same as another feature of the step S12 in above-described FIG. 6. Then, the control apparatus 7 generates the processing control information (namely, the common processing control information) for performing the additive processing on the measurement target workpiece W based on a result of the measurement operation at the step S12a (the step S13).

Then, the processing system SYS performs the alignment operation for calculating the placement position at which the plurality of workpieces W are placed on the stage 31 (the step S14). Then, the processing system SYS performs the additive processing on the plurality of workpieces W based on the common processing control information generated at the step S13 (a step S15a). However, the step S15a in the first modified example is different from the step S15 in above-described FIG. 6 in that the processing system SYS may not perform the additive processing on the abnormal workpiece W identified at the step S22a. Namely, the step S15a in the first modified example is different from the step S15 in above-described FIG. 6 in that the processing system SYS may perform the additive processing on the normal workpiece W that is not identified as the abnormal workpiece W at the step S22a. Another feature of the step S15a in the first modified example may be the same as another feature of the step S15 in above-described FIG. 6.

Then, after completing the additive processing on the workpiece set WS including the plurality of workpieces W placed on the stage 31, the control apparatus 7 determines whether or not there is the new workpiece set WS (namely, the next workpiece set WS) including the plurality of workpieces W on which the processing system SYS should0 newly perform the additive processing (the step S16).

As a result of the determination at the step S16, in a case where it is determined that there is the new workpiece set WS on which the processing system SYS should perform the additive processing (the step S16: Yes), the plurality of workpieces W included in the new workpiece set WS are placed on the stage 31 (the step S17). Then, the processing system SYS performs the operations from the step S21a to the step S15 on the plurality of workpieces W placed on the stage 31 at the step S17. Namely, the processing system SYS measures the shapes of the plurality of workpieces W placed on the stage 31 at the step S17 (the step S21a), identifies the abnormal workpieces W (the step S22a), performs the alignment operation for calculating the placement positions of the plurality of workpieces W (the step S14), and performs the additional processing on the normal workpieces W placed on the stage 31 at the step S17 based on the common processing control information that has been already generated (the step S15a). In this case, the processing system SYS may not generate the common processing control information again, because it is determined at a step S23a that the common processing control information has been already generated.

On the other hand, as a result of the determination at the step S16, in a case where it is determined that there is not the new workpiece set WS on which the processing system SYS should perform the additive processing (the step S16: No), the processing system SYS terminates the operation illustrated in FIG. 12.

Incidentally, in the above-described description, the measurement apparatus 4 of the processing system SYS performs the measurement operation for measuring the shapes of the plurality of workpieces W in order to identify the abnormal workpieces W. However, a measurement apparatus external to the processing system SYS may perform the measurement operation for measuring the shapes of the plurality of workpieces W in order to identify the abnormal workpieces W. In this case, the control apparatus 7 may acquire, from the external measurement apparatus, information related to the measured result of the measurement operation performed by the external measurement apparatus and identify the abnormal workpieces W based on the acquired information. The same may be applied to second and third modified examples described below in which the abnormal workpiece W is identified.

In a case where the pre-processing process is performed on at least one of the plurality of workpieces W placed on the stage 31, the measurement apparatus 4 may measure the shapes of the plurality of workpieces W after the pre-processing process is performed, in order to identify the abnormal workpiece W. Alternatively, the measurement apparatus 4 may measure the shapes of the plurality of workpieces W before the pre-processing is performed, in order to identify the abnormal workpiece W. In a case where the plurality of workpieces W is measured by the measurement apparatus 4 before the pre-processing process is performed, the control apparatus 7 may estimate, based on a processed amount by the pre-processing process (for example, a removed amount by the removal processing) and the measured result of the plurality of workpieces W by the measurement apparatus 4, the shapes of the plurality of workpieces W on which the pre-processing process has been performed, and identify the workpiece W whose estimated shape does not satisfy the shape criterion as the abnormal workpiece W. The same may be applied to the second and third modified examples described below in which the abnormal workpiece W is identified.

In a case where the plurality of workpieces W are measured by the measurement apparatus 4 before the pre-processing process is performed, the control apparatus 7 may determine the processed amount by the pre-processing process based on the measured result by the measurement apparatus 4. For example, in a case where the plurality of worn turbine blades are used as the plurality of workpieces W, the control apparatus 7 may calculate the worn amount each of the plurality of workpieces W based on the measured result by the measurement apparatus 4, and determine, based on the calculated worn amount, the processed amount by the pre-processing process to make the shapes of the workpieces W be the same. Note that the measurement apparatus 4 may measure the shapes of the plurality of workpieces W before the pre-processing process is performed for the purpose of determining the processed amount the pre-processing process, in addition to or instead of the purpose of identifying the abnormal workpieces W. The same may be applied to the second and third modified examples described below.

### (4-2) Second Modified Example

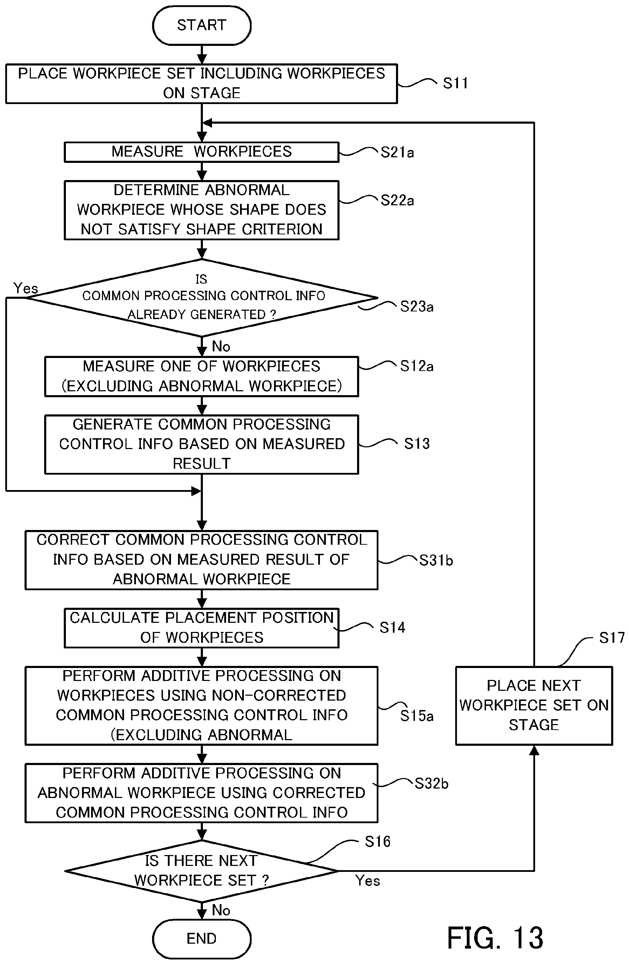

Next, with reference to FIG. 13, the second modified example of the operation for performing the additive processing on the plurality of workpieces W will be described. FIG. 13 is a flowchart that illustrates a flow of the second modified example of the operation for performing the additive processing on the plurality of workpieces W.

As illustrated in FIG. 13, in the second modified example, the operations from the step S11 to the step S13 are performed in the same manner as in the first modified example. Namely, the plurality of workpieces W are placed on the stage 31 (the step S11), the measurement apparatus 4 performs the measurement operation for measuring the shape of the plurality of workpieces W (the step S21a), and the control apparatus 7 identifies the abnormal workpiece W (the step S22a). Furthermore, in a case where the common processing control information has not been already generated (the step S23a: No), the measurement apparatus 4 performs the measurement operation for measuring the shape of the measurement target workpiece W (the step S12a), and the control apparatus 7 generates the common processing control information (the step S13).

Then, the control apparatus 7 corrects the common processing control information generated at the step S13 based on the result of the measurement operation at the step S21a (especially, the measured result of the abnormal workpiece W) (a step S31b). At the step S31b, the control apparatus 7 may correct the common processing control information so that the corrected common processing control information is the processing control information for performing the additive processing on the abnormal workpiece W. Namely, the control apparatus 7 corrects the common processing control information so that the corrected common processing control information is the processing control information for performing the additive processing on the abnormal workpiece W having the characteristic (especially, the shape) measured at the step S21a.

Then, the processing system SYS performs the alignment operation for calculating the placement position at which the plurality of workpieces W are placed on the stage 31 (the step S14). Then, the processing system SYS performs the additive processing on the normal workpieces W other than the abnormal workpieces W among the plurality of workpieces W based on the common processing control information generated at the step S13 (especially, the common processing control information that is not corrected at the step S31b) (a step S15a). Furthermore, the processing system SYS performs the additive processing on the abnormal workpiece W among the plurality of workpieces W based on the common processing control information generated at the step S13 (especially, the common processing control information that has been corrected at the step S31b) (a step S32b).

Then, after completing the additive processing on the workpiece set WS including the plurality of workpieces W placed on the stage 31, the control apparatus 7 determines whether or not a new workpiece set WS (namely, the next workpiece set WS) including the plurality of workpieces W on which the processing system SYS should newly performs the additive processing (the step S16). As a result of the determination at the step S16, in a case where it is determined that there is the new workpiece set WS on which the processing system SYS should perform the additive processing (the step S16: Yes), the plurality of workpieces W included in the new workpiece set WS are placed on the stage 31 (the step S17). Then, the processing system SYS performs the operations from the step S21a to the step S32b on the plurality of workpieces W placed on the stage 31 at the step S17. On the other hand, as a result of the determination at the step S16, in a case where it is determined that there is not the new workpiece set WS on which the processing system SYS should perform the additive processing (the step S16: No), the processing system SYS terminates the operation illustrated in FIG. 13.

As described above, in the second modified example, the processing system SYS is capable of performing the additive processing not only on the normal workpiece W whose shape satisfies the predetermined shape criterion, but also on the abnormal workpiece W whose shape does not satisfy the predetermined shape criterion. In this case, the processing system SYS corrects the common processing control information, which is generated based on the measured result of the measurement target workpiece W that is the normal workpiece W, based on the measured result of the abnormal workpiece W, and performs the additive processing on the abnormal workpiece W by using the corrected common processing control information. Thus, the processing system SYS is capable of appropriately performing the additive processing on the abnormal workpiece W. Specifically, the processing system SYS is capable of performing the additive processing on the abnormal workpiece W so that the shape of the abnormal workpiece W on which the additive processing has been performed is the same as the shape of the normal workpiece W on which the additive processing has been performed.

### (4-3) Third Modified Example

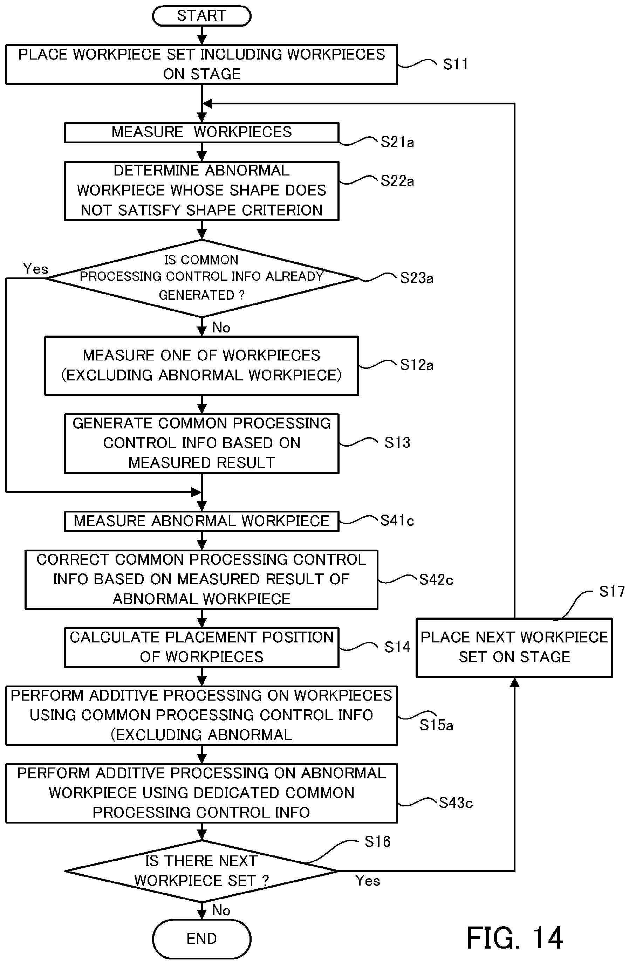

Next, with reference to FIG. 14, the third modified example of the operation for performing the additive processing on the plurality of workpieces W will be described. FIG. 14 is a flowchart that illustrates a flow of the third modified example of the operation for performing the additive processing on the plurality of workpieces W.

As illustrated in FIG. 14, in the third modified example, the operations from the step S11 to the step S13 are performed in the same manner as in the second modified example. Namely, the plurality of workpieces W are placed on the stage 31 (the step S11), the measurement apparatus 4 performs the measurement operation for measuring the shapes of the plurality of workpieces W (the step S21a), and the control apparatus 7 identifies the abnormal workpiece W (the step S22a). Further, in a case where the common processing control information has not been already generated (the step S23a: No), the measurement apparatus 4 performs the measurement operation for measuring the shape of the measurement target workpiece W (the step S12a), and the control apparatus 7 generates the common processing control information (the step S13).

Then, the measurement apparatus 4 performs a measurement operation for measuring the shape of the abnormal workpiece W identified at the step S22a (a step S41c). Then, the control apparatus 7 generates the processing control information for performing the additive processing on the abnormal workpiece W based on the result of the measurement operation at the step S41c (namely, the measured result of the abnormal workpiece W) (a step S42c). Namely, in the third modified example, the control apparatus 7 generates processing control information dedicated for performing the additive processing on the abnormal workpiece W, separately from the common processing control information for performing the additive processing on the normal workpiece W. In the below-described description, the processing control information dedicated for the additive processing on the abnormal workpiece W is referred to as a "dedicated processing control information".

The measurement field of view of the measurement apparatus 4 that performs the measurement operation at the step S41c (namely, the measurement operation for identifying the dedicated processing control information) may be narrower than the measurement field of view of the measurement apparatus 4 that performs the measurement operation at the step S21a (namely, the measurement operation for identifying the abnormal workpiece W). The measurement field of view of the measurement apparatus 4 that performs the measurement operation at the step S41c may be the same as the measurement field of view of the measurement apparatus 4 that performs the measurement operation at the step S12a (namely, the measurement operation for generating the common processing control information). The measurement resolution of the measurement apparatus 4 that performs the measurement operation at the step S41c may be higher than the measurement resolution of the measurement apparatus 4 that performs the measurement operation at the step S21a. Namely, the measurement accuracy of the measurement apparatus 4 that performs the measurement operation at the step S41c may be higher than the measurement accuracy of the measurement apparatus 4 that performs the measurement operation at the step S21a. The measurement resolution of the measurement apparatus 4 that performs the measurement operation at the step S41c may be the same as the measurement resolution of the measurement apparatus 4 that performs the measurement operation at the step S12a. Namely, the measurement accuracy of the measurement apparatus 4 that performs the measurement operation at the step S41c may be the same as the measurement accuracy of the measurement apparatus 4 that performs the measurement operation at the step S12a. In order to generate the dedicated processing control information, the measurement apparatus 4 may measure the shape of the abnormal workpiece W in the fine state having the relatively narrow measurement field of view and the relatively high measurement resolution (namely, the relatively high measurement accuracy). As a result, compared to a case where the measurement apparatus 4 measures the shape of the abnormal workpiece W in the rough state having the relatively wide measurement field of view and the relatively low measurement resolution (namely, the relatively low measurement accuracy) to generate the dedicated processing control information at the step S41c, the processing control information that allows the abnormal workpiece W to be processed with higher accuracy is generated.

Then, the processing system SYS performs the alignment operation for calculating the placement position at which the plurality of workpieces W are placed on the stage 31 (the step S14). Then, the processing system SYS performs the additive processing on the normal workpieces W other than the abnormal workpieces W among the plurality of workpieces W based on the common processing control information generated at the step S13 (step S15a). Furthermore, the processing system SYS performs the additive processing on the abnormal workpiece W among the plurality of workpieces W based on the dedicated processing control information generated at the step S42c (a step S43c).

Then, after completing the additive processing on the workpiece set WS including the plurality of workpieces W placed on the stage 31, the control apparatus 7 determines whether or not there is the new workpiece set WS (namely, the next workpiece set WS) including the plurality of workpieces W on which the processing system SYS should newly performs the additive processing (the step S16). As a result of the determination at the step S16, in a case where it is determined that there is the new workpiece set WS on which the processing system SYS should perform the additive processing (the step S16: Yes), the plurality of workpieces W included in the new workpiece set WS are placed on the stage 31 (the step S17). Then, the processing system SYS performs the operations from the step S21a to the step S43c on the plurality of workpieces W placed on the stage 31 at the step S17. On the other hand, as a result of the determination at the step S16, in a case where it is determined that there is not the new workpiece set WS on which the processing system SYS should perform the additive processing (the step S16: No), the processing system SYS terminates the operation illustrated in FIG. 14.

As described above, in the third modified example, the processing system SYS is capable of performing the additive processing not only on the normal workpiece W whose shape satisfies the predetermined shape criterion, but also on the abnormal workpiece W whose shape does not satisfy the predetermined shape criterion. In this case, the processing system SYS generates the dedicated processing control information for performing the additive processing on the abnormal workpiece W based on the measured result of the abnormal workpiece W (especially, the measured result of the abnormal workpiece W by the measurement apparatus 4 in the fine state), and performs the additive processing on the abnormal workpiece W by using the dedicated processing control information. Thus, the processing system SYS is capable of appropriately performing the additive processing on the abnormal workpiece W. Specifically, the processing system SYS is capable of performing the additive processing on the abnormal workpiece W so that the shape of the abnormal workpiece W on which the additive processing has been performed is the same as the shape of the normal workpiece W on which the additive processing has been performed.

### (4-4) Fourth Modified Example

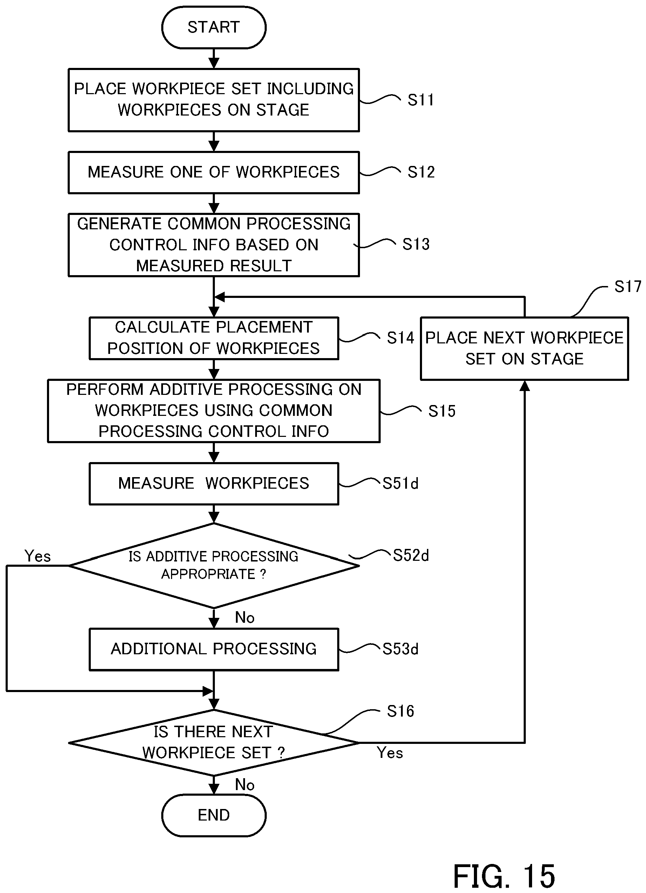

Next, with reference to FIG. 15, a fourth modified example of the operation for performing the additive processing on the plurality of workpieces W will be described. FIG. 15 is a flowchart that illustrates a flow of the fourth modified example of the operation for performing the additive processing on the plurality of workpieces W.

As illustrated in FIG. 15, in the fourth modified example, the operations from the step S11 to the step S15 are performed in the same manner as the operation illustrated in the above-described FIG. 6. Namely, the plurality of workpieces W are placed on the stage 31 (the step S11), the measurement apparatus 4 performs the measurement operation for measuring the shape of the measurement target workpiece W (the step S12), the control apparatus 7 generates the common processing control information (the step S13), the processing system SYS performs the alignment operation (the step 14), and the processing system SYS performs the additive processing on the plurality of workpieces W based on the common processing control information (the step S15).

Then, in the fourth modified example, after the processing system SYS performs the additive processing on the plurality of workpieces W, the measurement apparatus 4 performs a measurement operation for measuring the shape of at least one of the plurality of workpieces W on which the additive processing has been performed at the step S15 (a step S51d). For example, the measurement apparatus 4 may perform the measurement operation for measuring the shape of the measurement target workpiece W that has been processed at the step S15. For example, the measurement apparatus 4 may perform the measurement operation for measuring the shapes of another workpiece W other than the measurement target workpiece W among the plurality of workpieces W that have been processed at the step S15.

As described in detail later, a result of the measurement operation at the step S51d is used to determine whether or not the additive processing performed on the workpiece W is appropriate. In this case, the measurement field of view of the measurement apparatus 4 that performs the measurement operation at the step S51d (namely, the measurement operation for determining whether or not the additive processing performed on the workpiece W is appropriate) may be the same as, may be wider than or may be narrower than the measurement field of view of the measurement apparatus 4 that performs the measurement operation at the step S12 (namely, the measurement operation for generating the common processing control information). The measurement resolution of the measurement apparatus 4 that performs the measurement operation at the step S51d may be the same as, may be lower than or may be higher than the measurement resolution of the measurement apparatus 4 that performs the measurement operation at the step S12. Namely, the measurement accuracy of the measurement apparatus 4 that performs the measurement operation at the step S51d may be the same as, may be lower that, or may be higher than the measurement accuracy of the measurement apparatus 4 that performs the measurement operation at the step S12. In order to determine whether or not the additive processing performed on the workpiece W is appropriate, the measurement apparatus 4 may measure the shape of the workpiece W in the fine state having the relatively narrow measurement field of view and the relatively high measurement resolution (namely, the relatively high measurement accuracy). In order to determine whether or not the additive processing performed on the workpiece W is appropriate, the measurement apparatus 4 may measure the workpiece W in the rough state having the relatively wide measurement field of view and the relatively low measurement resolution (namely, the relatively low measurement accuracy).

Then, the control apparatus 7 determines whether or not the additive processing performed on at least one of the plurality of workpieces W at the step S15 is appropriate based on the results of the measurement operation at the step S51d (namely, the measured result of the workpieces W on which the additive processing has been performed) (a step S52d). For example, the control apparatus 7 may determine the shape of the workpiece W on which the additive processing has been performed (namely, the shape of the workpiece W to which the build object has been added and the shape of an object including the build object and the workpiece W) based on the measured result of the measurement operation at the step S51d, and determine whether or not the additive processing is appropriate by determining whether or not the shape of the workpiece W on which the additive processing has been performed is a desired shape. For example, the shape that the workpiece W should have after the additive processing is performed (namely, the shape of the above-described target model) may be used as the desired shape. In this case, for example, the control apparatus 7 may determine that the additive processing is appropriate in a case where the shape of the workpiece W on which the additive processing has been performed is the desired shape.

As a result of the determination at the step S52d, in a case where it is determined that the additive processing is not appropriate (the step S52d: No), the processing system SYS may perform the additional processing (in other words, a secondary processing) on the workpiece W on which inappropriate additive processing has been performed.

For example, in a case where the shape of the workpiece W on which the additive processing has been performed is smaller than the desired shape, it is presumed that the additive processing is determined to be inappropriate because a processed amount by the additive processing (namely, a size of the added build object) is insufficient. In this case, the processing system SYS may perform the additional processing (namely, the additive processing) for adding the build object to the workpiece W to compensate for the insufficient processed amount by the additive processing. In this case, the control apparatus 7 may generate the processing control information for building the build object to compensate for the insufficient processed amount by the additive processing based on the measured result at the step S51d, and the processing system SYS may perform the additional processing based on the generated processing control information. Namely, the processing system SYS may perform the additional processing based on the measured result of the measurement operation at the step S51d. As a result, the processing system SYS is capable of performing the additional processing on the workpiece W so that the shape of the workpiece W after the additional processing is the desired shape.

Alternatively, for example, in a case where the shape of the workpiece W on which the additive processing has been performed is larger than the desired shape, it is presumed that the additive processing is determined to be inappropriate because the processed amount by the additive processing (namely, the size of the added build object) is excessive. In this case, the processing system SYS may perform the additional processing (namely, the removal processing) for removing the excessive build object added by the additive processing. For example, the processing system SYS may perform the removal processing by using the processing light EL. For example, the processing system SYS may perform the removal processing by using a tool (for example, a cutting tool). In this case, the control apparatus 7 may generate the processing control information for controlling the processing unit 2 and the stage unit 3 to remove the excessive build object added by the additive processing based on the measured result at the step S51d, and the processing system SYS may perform the additional processing based on the generated processing control information. Namely, the processing system SYS may perform the additional processing based on the measured result of the processing at the step S51d. As a result, the processing system SYS is capable of performing the additional processing on the workpiece W so that the shape of the workpiece W after the additional processing is the desired shape.

After the additional processing is performed, the processing system SYS continues to perform the additive processing on the plurality of workpieces W included in the new workpiece set WS until it is determined that there is not the new workpiece set WS (namely, the next workpiece set WS) including the plurality of workpieces W on which the processing system SYS should newly perform the additive processing (the step S16 to the step S17 and the step S14 to the step S53d).

Incidentally, in the above-described description, the processing system SYS performs the additional processing on the workpieces W. However, an apparatus external to the processing system SYS may perform the additional processing on the workpiece W. In this case, the control apparatus 7 may transmit (namely, output) information on the result of the measurement operation at the step S51d in FIG. 15 to the external apparatus that performs the additional processing.

Moreover, in the above-described description, the processing system SYS performs the additional processing to process the workpiece W so that the shape of the workpiece W after the additional processing is the desired shape that the workpiece W should have after the additional processing (namely, the repair processing) is performed. However, the processing system SYS may perform any additional processing. For example, the processing system SYS may perform the additional processing for forming a hole in the workpiece W, may perform the additional processing for forming a groove in the workpiece W, and may perform the additional processing for forming a desired structure (for example, a ribbed structure for reducing resistance of a surface of the workpiece W to fluid) in the workpiece W.

Moreover, an operation specific to the fourth modified example may be performed not only in the example embodiment described above but also in at least one of the first to third modified examples. The operation specific to the fourth modified example may include an operation for measuring the shape of at least one of the plurality of workpieces W after the additive processing is performed on the plurality of workpieces W and for performing the additional processing on at least one of the plurality of workpieces W as necessary.

### (4-5) Fifth Modified Example

Next, a fifth modified example of the operation for performing the additive processing on the plurality of workpieces W will be described. In the fifth modified example, the processing system SYS may perform the additive processing on the plurality of workpieces W so that the difference in size (namely, the difference in shape) between at least two of the plurality of workpieces W after the additive processing is performed is smaller than the difference in size between the at least two of the plurality of workpieces W before the additive processing is performed.

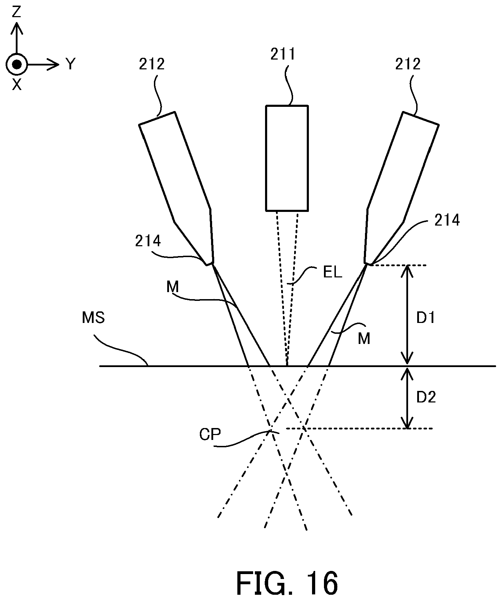

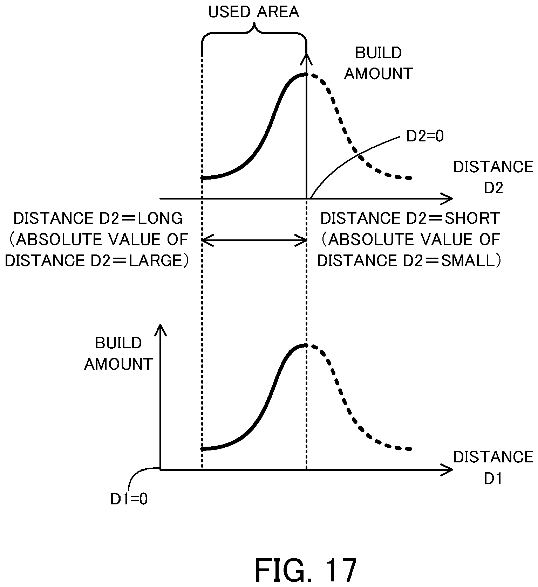

In order to perform the additive processing on the plurality of workpieces W in this manner, the processing system SYS may have such a function (herein after, it is referred to as a "self-alignment function") that the processed amount by the additive processing (namely, a size of the build object added to the build surface MS by the additive processing, and a height of the above-described structural layer SL, for example) varies depending on a distance D1 between the build surface MS and the processing head 21 (especially, a distance D1 between the build surface MS and the material nozzle 212 (especially, the supply outlet 214)), for example, next, the self-alignment function will be described with reference to FIG. 16 and FIG. 17.

FIG. 16 illustrates a supply path of the build materials M from the plurality of material nozzles 212. As illustrated in FIG. 16, the supply outlets 214 of the plurality of material nozzles 212 may be directed toward different directions, in order to achieve the self-alignment function. For example, the supply outlet 214 of the first material nozzle 212 may be directed toward a first direction, and the supply outlet 214 of the second material nozzle 212 may be directed toward a second direction. Furthermore, positions of the plurality of material nozzles 212 may be adjusted so that the supply paths of the build materials M from the plurality of supply outlets 214, which are respectively directed toward the different directions, intersect with each other at a concentration area CP, in order to achieve the self-alignment function. Namely, the positions of the plurality of material nozzles 212 may be adjusted so that the build materials M supplied from the plurality of supply outlets 214, which are respectively directed toward the different directions, are supplied to the concentration area CP.

In an example illustrated in FIG. 16, the concentration area CP is located below the build surface MS (namely, at a position that is away from the build surface MS toward the -Z side). In this case, the processing system SYS performs the additive processing on the workpiece W in a state where the build materials M supplied from the material nozzle 212 reach the build surface MS before actually reaching the concentration area CP. However, the concentration area CP may be located on the build surface MS. Namely, the processing system SYS may process the workpiece W in a state where the build materials M supplied from the material nozzle 212 reach both of the build surface MS and the concentration area CP at the same time. Alternatively, the concentration area CP may be located above the build surface MS (namely, at a position that is away from the build surface MS toward the +Z side). Namely, the processing system SYS may process the workpiece W in a state where the build materials M supplied from the material nozzle 212 reach the build surface MS after actually reaching the concentration area CP.

In this case, the size of the build object added to the build surface MS by the additive processing (in the example illustrated in FIG. 16, the size in the Z-axis direction, and it is referred to as a "built amount" in the below-described description) varies depending on the distance D1 between the build surface MS and the processing head 21.

Specifically, as illustrated in FIG. 16, a distance D2 between the concentration area CP and the build surface MS is shorter as the distance D1 is longer. As a result, the amount of the build material M supplied from the material nozzle 212 to the melt pool MP is larger. This is because the concentration area CP at which the build materials M are concentrated is closer to the build surface MS as the distance D2 is shorter. An amount of the build materials M molten in the melt pool MP is larger as the amount of the build materials M supplied to the melt pool MP is larger. An amount of the build materials M solidified on the build surface MS is larger as the amount of the build materials M molten in the melt pool MP is larger. As a result, the height of the build object including the solidified build materials M is higher. Thus, as illustrated in FIG. 17, the distance D2 and the build amount have such a relationship that the build amount is larger as the distance D2 is shorter. Namely, the distance D2 and the build amount have such a relationship that the build amount is smaller as the distance D2 is longer. Similarly, as illustrated in FIG. 17, the distance D1 and the build amount have such a relationship in that the build amount is larger as the distance D1 is longer. Namely, the distance D1 and the build amount have such a relationship that the build amount is smaller as the distance D1 is shorter.

Note that FIG. 17 illustrates a graph in which the distance D2 in the case where the concentration area CP is located above the build surface MS is a positive distance and the distance D2 in the case where the concentration area CP is located below the build surface MS is a negative distance. As described above, the processing system SYS performs the additive processing on the workpiece W in the state where the concentration area CP is located below the build surface MS (namely, the build surface MS is located between the concentration area CP and the material nozzle 212). Thus, the distance D2 has a value in a range within an area (it is referred to as a used area) smaller than zero. In this case, the relationship that the build amount is larger as the distance D2 is shorter means such a relationship that the build amount is larger as an absolute value of the distance D2 is smaller. Similarly, the relationship that the build amount is smaller as the distance D2 is longer means such a relationship that the build amount is smaller as the absolute value of the distance D2 is larger. Thus, in the below-described description, the distance D2 means the absolute value of the distance D2 if there is no special notation.

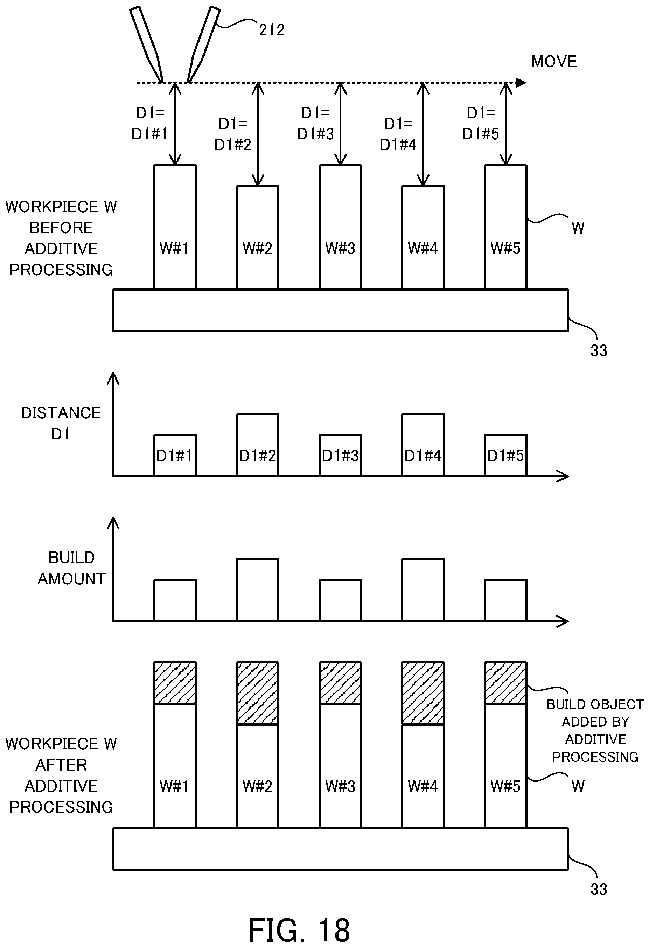

The processing system SYS may use the self-alignment function to perform the additive processing on the plurality of workpieces W so that the difference in size (namely, the difference in shape) between at least two of the plurality of workpieces W after the additive processing is performed is smaller than the difference in size between the at least two of the plurality of workpieces W before the additive processing is performed. Next the additive processing using the self-alignment function will be described with reference to FIG. 18.

The uppermost part in FIG. 18 illustrates the plurality of workpieces W including at least two workpieces W having different sizes (in an example illustrated in FIG. 18, sizes in the Z-axis direction and heights). In the example illustrated in FIG, 18, the height of each of the workpieces W#1, W#3 and W#5 is higher than the height of each of the workpieces W#2 and W#4. In a case where the additive processing is performed on the plurality of workpieces W including the workpieces W#1 to W#5, each of the distance D1#1 between the build surface MS (namely, the surface of workpiece W#1) and the material nozzle 212 in a case where the workpiece W#1 is processed, the distance D1#3 between the build surface MS (namely, the surface of workpiece W#3) and the material nozzle 212 in a case where the workpiece W#3 is processed, and the distance D1#5 between the build surface MS (namely, the surface of workpiece W#5) and the material nozzle 212 in a case where the workpiece W#5 is processed is shorter than each of the distance D1#2 between the build surface MS (namely, the surface of workpiece W#2) and the material nozzle 212 in a case where the workpiece W#2 is processed and the distance D1#4 between the build surface MS (namely, the surface of workpiece W#4) and the material nozzle 212 in a case where the workpiece W#4 is processed. As a result, as illustrated in FIG. 18, each of the build amount of the workpiece W#1, the build amount of the workpiece W#3, and the build amount of the workpiece W#5 is smaller than the build amount of the workpiece W#2 and the build amount of the workpiece W#4. Thus, as illustrated in FIG. 18, the difference in size between each of the workpieces W#1, W#3, and W#5 and each of the workpieces W#2 and W#4 after the additive processing is performed is smaller than the difference in size between each of the workpieces W#1, W#3, and W#5 and each of the workpieces W#2 and W#4 before the additive processing is performed.

Thus, in the fifth modified example, the processing system SYS is capable of performing the additive processing on the plurality of workpieces W so that the difference in size between the plurality of workpieces W after the additive processing is performed is smaller than that before the additive processing is performed. Typically, the processing system SYS may perform the additive processing on the plurality of workpieces W so that the sizes of the plurality of workpieces W after the additive processing is performed are same as each other.

Note that an operation specific to the fifth modified example may be performed not only in the example embodiment described above but also in at least one of the first to fourth modified examples. The operation specific to the fifth modified example may include an operation using the self-alignment function.

### (4-6) Sixth Modified Example

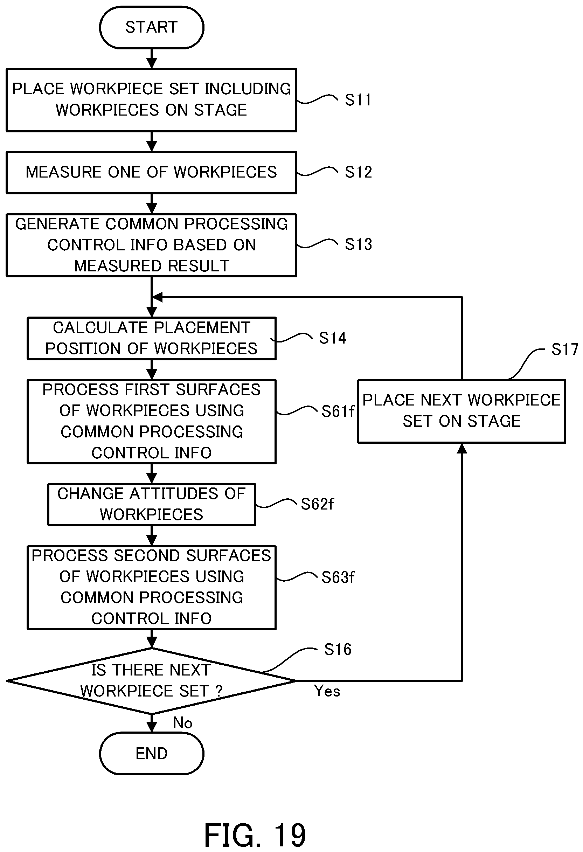

Next, with reference to FIG. 19, a seventh modified example of the operation for performing the additive processing on the plurality of workpieces W will be described. FIG. 19 is a flowchart that illustrates a flow of the seventh modified example of the operation for performing the additive processing on the plurality of workpieces W.

As illustrated in FIG. 19, in a sixth modified example, the operations from the step S11 to the step S14 are performed in the same manner as the operation illustrated in the above-described FIG. 6. Namely, the plurality of workpieces W are placed on the stage 31 (the step S11), the measurement apparatus 4 performs the measurement operation for measuring the shape of the measurement target workpiece W (the step S12), the control apparatus 7 generates the common processing control information (the step S13), and the processing system SYS performs the alignment operation (the step 14).

Then, the processing system SYS performs the additive processing on the plurality of workpieces W based on the common processing control information (a step S61f). Especially, at the step S61f, the processing system SYS sets the build surface MS on a first surface (for example, a surface facing toward the processing head 21 side) of each of the plurality of workpieces W based on the common processing control information, and performs the additive processing on the first surfaces.

Then, the processing system SYS changes attitudes of the plurality of workpieces W (namely, an attitude of the stage 31 on which the plurality of workpieces W are placed) relative to the processing head 21 (a step S62f). In this case, the processing system SYS changes the attitudes of the plurality of workpieces W so that the build surface MS can be set on a second surface (specifically, a surface that is different from the first surface on which the additive processing has been performed at the step S61f) of each of the plurality of workpieces W. For example, the processing system SYS may change the attitudes of the plurality of workpieces W so that the second surface of each of the plurality of workpieces W faces toward the processing head 21 side.

Then, the processing system SYS performs the additive processing on the plurality of workpieces W based on the common processing control information (a step S63f). Especially, at the step S63f, the processing system SYS sets the build surface MS on the second surface (for example, a surface facing toward the processing head 21 side) of each of the plurality of workpieces W based on the common processing control information, and performs the additive processing on the second surfaces.

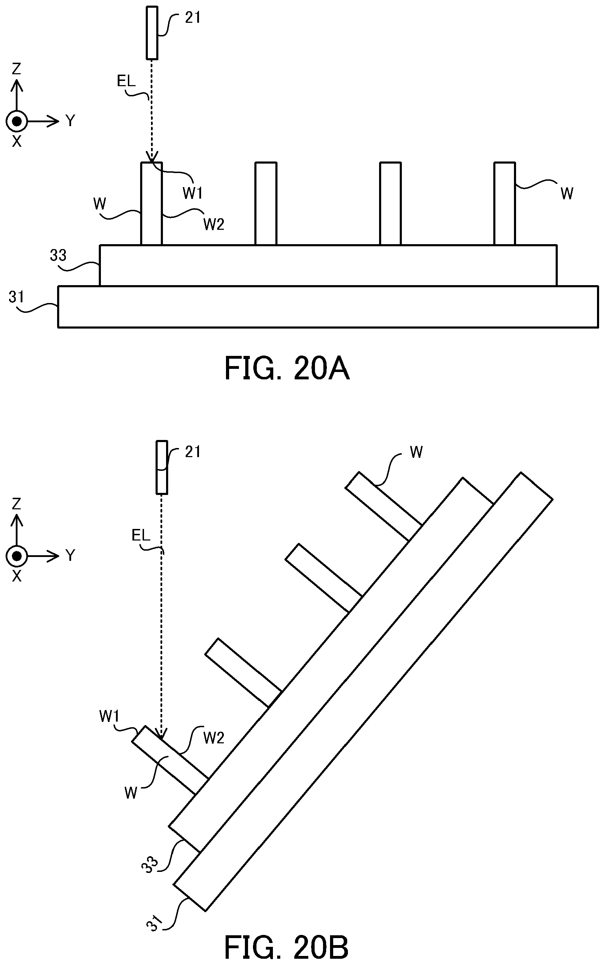

The processing system SYS may change the attitudes of the plurality of workpieces W by moving the stage 31 (namely, changing the attitude of the stage 31) by using the stage driving system 32. For example, FIG. 20A is a cross-sectional view that illustrates a positional relationship between the processing head 21 and the plurality of workpieces W before moving the stage 31 to change the attitudes of the plurality of workpieces W. In a state illustrated in FIG. 20A, the processing system SYS may perform the additive processing on first surfaces W1 by irradiating the first surface W1 (namely, a top surface) of each of the plurality of workpieces W with the processing light EL. On the other hand, FIG. 20B is a cross-sectional view that illustrates the positional relationship between the processing head 21 and the plurality of workpieces W after moving the stage 31 to change the attitudes of the plurality of workpieces W. In a state illustrated in FIG. 20A, the processing system SYS may perform the additive processing on second surfaces W2 by irradiating the second surface W2 (for example, a side surface) of each of the plurality of workpieces W with the processing light EL.

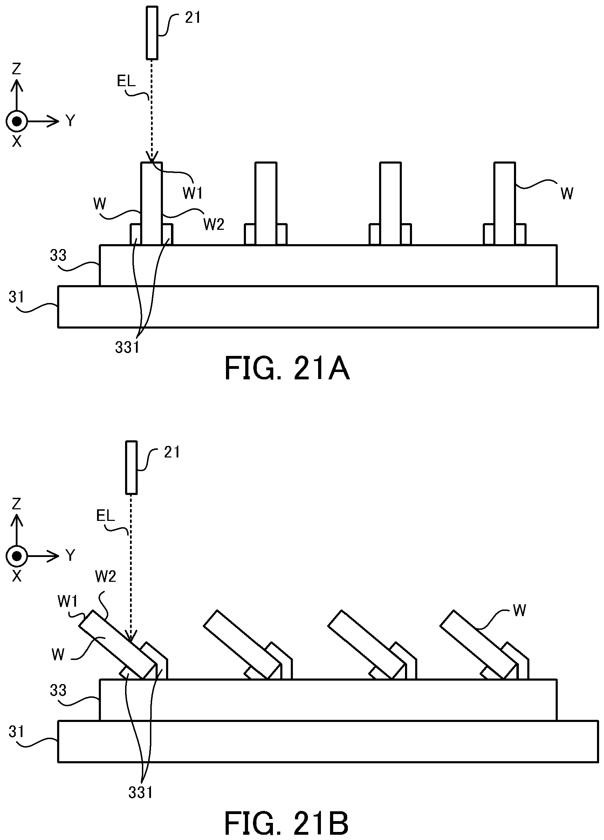

The processing system SYS may change the attitudes of the plurality of workpieces W by using the jig 33. In this case, the jig 33 may be configured to change the attitudes of the plurality of workpieces W. For example, the jig 33 may change the attitudes of the workpieces W held by the fixing jaws 331 by moving the fixing jaws 331 that hold the workpieces W. For example, FIG. 21A is a cross-sectional view that illustrates a positional relationship between the processing head 21 and the plurality of workpieces W before the jig 33 changes the attitudes of the plurality of workpieces W. In the state illustrated in FIG. 21A, the processing system SYS may perform the additive processing on the first surfaces W1 by irradiating on the first surface W1 (for example, the top surface) of each of the plurality of workpieces W with the processing light EL. On the other hand, FIG. 21B is a cross-sectional view that illustrates the positional relationship between the processing head 21 and the plurality of workpieces W after the jig 33 changes the attitudes of the plurality of workpieces W. In the state illustrated in FIG. 21A, the processing system SYS may perform the additive processing on the second surfaces W2 by irradiating on the second surface W2 (for example, the side surface) of each of the plurality of workpieces W with the processing light EL.

Note that the processing system SYS may change the attitudes of the plurality of workpieces W so that the build surface MS can be set on another surface (specifically, a surface that is different from the two surfaces on which the additive processing has been already performed at the steps S61f and 63f) of each of the plurality of workpieces W. Then, the processing system SYS may perform the additive processing on another surface of each of the plurality of workpieces W based on the common processing control information.

Then, the processing system SYS continues to perform the additive processing on the plurality of workpieces W included in the new workpiece set WS until it is determined that there is not the new workpiece set WS (namely, the next workpiece set WS) including the plurality of workpieces W on which the processing system SYS should newly perform the additive processing (the step S16 to the step S17 and the step S14 to the step S63f).

Thus, in the sixth modified example, the processing system SYS is capable of performing the additive processing on the plurality of parts (for example, the plurality of surfaces) of each workpiece W.

Incidentally, in a case where the additive processing is performed on the plurality of parts of the workpiece W by changing the attitude of the workpiece W, the measurement apparatus 4 may measure the shape of the first part among the plurality of parts of the measurement target workpiece W at the step S12 in FIG. 19, and the control apparatus 7 may generate the common processing control information based on the measured result of the shape of the first part at the step S13 in FIG. 19. Furthermore, at the step S61f in FIG. 19, the processing system SYS may perform the additive processing on the first part of each of the plurality of workpieces W based on the common processing control information generated from the measured result of the shape of the first part. Furthermore, at the step S63f in FIG. 19, the processing system SYS may perform the additive processing on the second part of each of the plurality of workpieces W based on the common processing control information generated from the measured result of the shape of the first part. Alternatively, the processing system SYS may perform the additive processing on the plurality of parts of the workpiece W without changing the attitude of the workpiece W. Even in this case, the processing system SYS may perform the additive processing on the second part of each of the plurality of workpieces W based on the common processing control information generated from the measured result of the shape of the first part.

Moreover, an operation specific to the sixth modified example may be performed not only in the example embodiment described above but also in at least one of the first to fifth modified examples. The operation specific to the sixth modified example may include an operation for performing the additive processing on the plurality of parts (for example, the plurality of surfaces) of the workpiece W.

### (4-7) Seventh Modified Example

Next, a seventh modified example of the operation for performing the additive processing on the plurality of workpieces W will be described. In the seventh modified example, the processing system SYS may perform the additive processing on the plurality of workpieces W having rotationally symmetrical shapes.

A shaft member extending along a longitudinal direction is one example of the workpiece W having the rotationally symmetrical shape. A turbine shaft included in the turbine is one example of the shaft member.

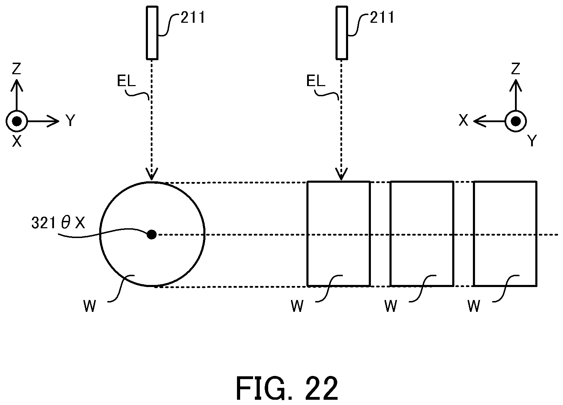

In a case where the additive processing is performed on the workpiece W having the rotationally symmetrical shape, the plurality of workpieces W may be placed on the stage 31 so that the rotational axis of the stage 31 is coincident with an axis (in the below-described description, it is referred to as a "central axis", for example, a center axis of the shaft member or the rotational axis of the turbine shaft) extending along a rotational center of the workpiece W having the rotationally symmetrical shape as illustrated in FIG. 22. In an example illustrated in FIG. 22, the plurality of workpieces W are placed on the stage 31 so that the center axes of the workpieces W are coincident with the rotational axis of the stage 31θX (namely, the rotational axis extending along the rotational shaft 321θX).

As illustrated in FIG. 22, the processing system SYS may irradiate the workpiece W with the processing light EL from a direction that intersects with the central axis of the workpiece W. In this case, in a case where the processing system SYS has the self-alignment function described above, the processing system SYS may perform the additive processing on the plurality of workpieces W so that a difference in size of radius between at least two of the plurality of workpieces W after the additive processing is performed is smaller than a difference in size of radius between at least two of the plurality of workpieces W before the additive processing is performed. Typically, the processing system SYS may perform the additive processing on the plurality of workpieces W so that the sizes of the radiuses of the plurality of workpieces W after the additive processing is performed are equal to each other.

### (4-8) Other Modified Example

In the above-described description, the processing system SYS performs the measurement operation for measuring the measurement target workpiece W, which is one of the plurality of workpieces W, by using the measurement apparatus 4 in order to generate the common processing control information. Namely, the processing system SYS performs the measurement operation for measuring the single measurement target workpiece W by using the measurement apparatus 4 in order to generate the common processing control information. However, the processing system SYS may perform the measurement operation for measuring the plurality of measurement target workpieces W by using the measurement apparatus 4 in order to generate the common processing control information. In this case, the control apparatus 7 may generate the common processing control information based on the measured result of the measurement operation for measuring the plurality of measurement target workpieces W. For example, in a case where the common processing control information is generated by using the measurement model and the target model as illustrated in FIG. 10, the control apparatus 7 may generate, based on the measured result of the measurement operation for measuring the plurality of measurement target workpieces W, the measurement model corresponding to a three-dimensional model representing an actual average size and average shape of the plurality of workpieces W.

In the above-described description, the processing system SYS includes the stage driving system 32. Namely, in the above-described description, the stage 31 is movable. However, the processing system SYS may not include the stage driving system 32. Namely, the stage 31 may not be movable. In the above-described description, the processing system SYS includes the head driving system 22. Namely, in the above-described description, the processing head 21 is movable. However, the processing system SYS may not include the head driving system 22. Namely, the processing head 21 may not be movable.

In the above-described description, the processing system SYS processes the workpiece W by irradiating the workpiece W with the processing light EL. However, the processing system SYS may process the workpiece W by irradiating the workpiece W with any energy beam. In this case, the processing system SYS may include a beam irradiation apparatus that is configured to emit any energy beam in addition to or instead of the irradiation optical system 211 and the light source 5. At least one of a charged particle beam, an electromagnetic wave and the like is one example of any energy beam. A least one of an electron beam, an ion beam and the like is one example of the charged particle beam.

### (5) Supplementary Note

Regarding the above-described embodiment, below-described supplementary notes are further disclosed.

### [Supplementary Note 1]

A processing system comprising:
a processing apparatus configured to perform an additive processing on a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to perform the additive processing on the first object,
the processing apparatus being configured to perform, based on the first processing control information, the additive processing on the first object and the additive processing on a second object of the plurality of objects that is different from the first object.

### [Supplementary Note 2]

The processing system according to Supplementary Note 1 further comprising an object placement apparatus on which the plurality of objects are placed,
after the processing apparatus performs the additive processing on a plurality of third objects including the first and second objects, a plurality of fourth objects different from the plurality of third objects being placed on the object placement apparatus,
the processing apparatus being configured to perform, based on the first processing control information, the additive processing on the plurality of fourth objects.

### [Supplementary Note 3]

The processing system according to Supplementary Note 1 or 2, wherein
the processing apparatus includes:
an energy beam irradiation part configured to emit an energy beam toward each of the plurality of obj ects; and
a material supply part configured to supply a build material to a part that is irradiated with the energy beam.

### [Supplementary Note 4]

The processing system according to any one of Supplementary Notes 1 to 3, wherein
sizes of at least two of the plurality of objects are different from each other.

### [Supplementary Note 5]

The processing system according to Supplementary Note 4, wherein
a difference in size between the at least two objects after the processing apparatus performs the additive processing is smaller than a difference in size between the at least two objects before the processing apparatus performs the additive processing.

### [Supplementary Note 6]

The processing system according to any one of Supplementary Notes 1 to 5 further comprising a measurement apparatus configured to perform the first measurement operation.

### [Supplementary Note 7]

The processing system according to any one of Supplementary Notes 1 to 6, wherein
a second measurement operation for measuring a shape of each of the plurality of objects is performed before the processing apparatus performs the additive processing on the plurality of obj ects,
the processing apparatus is configured not to perform the additive processing on a fifth object, whose shape measured by the second measurement operation does not satisfy a predetermined shape criterion, among the plurality of objects.

### [Supplementary Note 8]

The processing system according to any one of Supplementary Notes 1 to 7, wherein
a second measurement operation for measuring a shape of each of the plurality of objects is performed before the processing apparatus performs the additive processing on the plurality of obj ects,
the control apparatus is configured to correct the first processing control information based on a measured result by the second measurement operation of a shape of a fifth object, whose shape measured by the second measurement operation does not satisfy a predetermined shape criterion, among the plurality of obj ects,
the processing apparatus is configured to perform the additive processing on the fifth object based on the corrected first processing control information.

### [Supplementary Note 9]

The processing system according to any one of Supplementary Notes 1 to 8, wherein
a second measurement operation for measuring a shape of each of the plurality of objects with a first measurement accuracy is performed before the processing apparatus performs the additive processing on the plurality of objects,
a third measurement operation for measuring a shape of a fifth object, whose shape measured by the second measurement operation does not satisfy a predetermined shape criterion, among the plurality of objects with a second measurement accuracy that is higher than the first measurement accuracy is performed,
the control apparatus is configured to generate, based on a result of the third measurement operation, second processing control information for controlling the processing apparatus to perform the additive processing on the fifth object,
the processing apparatus is configured to perform the additive processing on the fifth object based on the second processing control information.

### [Supplementary Note 10]

The processing system according to Supplementary Note 9 further comprising a measurement apparatus configured to perform the third measurement operation.

### [Supplementary Note 11]

The processing system according to any one of Supplementary Notes 7 to 10 further comprising a measurement apparatus configured to perform the second measurement operation.

### [Supplementary Note 12]

The processing system according to any one of Supplementary Notes 7 to 11, wherein
the second measurement operation is an operation for measuring the shape of each of the plurality of objects with a first measurement accuracy,
the first measurement operation is an operation for measuring the shape of the first object with a second measurement accuracy that is higher than the first measurement accuracy.

### [Supplementary Note 13]

The processing system according to any one of Supplementary Notes 7 to 12, wherein
the second measurement operation is performed after a pre-processing process is performed on at least one of the plurality of objects.

### [Supplementary Note 14]

The processing system according to any one of Supplementary Notes 7 to 13, wherein
the second measurement operation is performed before a pre-processing process is performed on at least one of the plurality of objects.

### [Supplementary Note 15]

The processing system according to Supplementary Note 13 or 14, wherein
the pre-processing process includes a removal processing process for removing a part of at least one of the plurality of objects.

### [Supplementary Note 16]

The processing system according to any one of Supplementary Notes 1 to 15, wherein
a fourth measurement operation for measuring a shape of at least one of the first and second objects is performed after the processing apparatus performs the additive processing on at least one of the first and second objects.

### [Supplementary Note 17]

The processing system according to Supplementary Note 16, wherein
the processing apparatus processes at least one of the first and second objects based on a result of the fourth measurement operation.

### [Supplementary Note 18]

The processing system according to Supplementary Note 16 or 17, wherein
the processing apparatus is configured to process at least one of the first and second objects based on a result of the fourth measurement operation so that the shape of at least one of the first and second objects become a desired shape.

### [Supplementary Note 19]

The processing system according to any one of Supplementary Notes 16 to 18 further comprising a measurement apparatus configured to perform the fourth measurement operation.

### [Supplementary Note 20]

The processing system according to Supplementary Note 19, wherein
the measurement apparatus is configured to output information related to a result of the fourth measurement operation to an apparatus external to the processing system.

### [Supplementary Note 21]

The processing system according to any one of Supplementary Notes 1 to 20 further comprising:
an object placement apparatus on which the plurality of objects are placed; and
an attitude change apparatus configured to change an attitude of the object placement apparatus,
the processing apparatus being configured to perform the additive processing on a first surface of each of the first and second objects, and then, perform the additive processing on a second surface, which is different from the first surface, of each of the first and second objects after the attitude change apparatus changes the attitude of the object placement apparatus.

### [Supplementary Note 22]

The processing system according to any one of Supplementary Notes 1 to 21, wherein
the processing apparatus is configured to perform the additive processing on the plurality of objects placed on a jig,
attitudes of the plurality of objects placed on the jig are changeable,
the processing apparatus being configured to perform the additive processing on a first surface of each of the first and second objects, and then, perform the additive processing on a second surface, which is different from the first surface, of each of the first and second objects after the jig changes the attitudes of the plurality of objects.

### [Supplementary Note 23]

The processing system according to any one of Supplementary Notes 1 to 22, wherein
at least one of the plurality of objects includes a turbine blade and a turbine shaft.

### [Supplementary Note 24]

A processing system comprising:
a processing apparatus configured to perform a repair processing on a plurality of objects; and
a control apparatus configured to control the processing apparatus,
the control apparatus being configured to generate, based on at least one of shape information related to a shape of a first object of the plurality of objects after repair and a measured result of a shape of the first object, first processing control information for controlling the processing apparatus to process the first object,
the processing apparatus being configured to perform, based on the first processing control information, the repair processing on the first object and a second object of the plurality of objects that is different from the first object.

### [Supplementary Note 25]

The processing system according to Supplementary Note 24, wherein
the control apparatus is configured to generate the first processing control information based on a comparison result of the shape information related to the shape of the first object after repair and the measured result of the shape of the first object.

### [Supplementary Note 26]

A processing system comprising:
a processing apparatus configured to perform a repair processing on a plurality of parts of an obj ect; and
a control apparatus configured to control the processing apparatus,
the control apparatus being configured to generate, based on at least one of shape information related to a shape of a first part of the plurality of parts after repair and a measured result of a shape of the first part, first processing control information for controlling the processing apparatus to process the first part,
the processing apparatus being configured to perform, based on the first processing control information, the repair processing on the first part and a second part of the plurality of parts that is different from the first part.

### [Supplementary Note 27]

A processing system comprising:
a processing apparatus configured to perform an additive processing on a plurality of workpieces; and
a control apparatus configured to control the processing apparatus,
the control apparatus being configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece,
the processing apparatus being configured to perform, based on the first processing control information, a repair processing on the first workpiece and a second workpiece of the plurality of objects that is different from the first workpiece.

### [Supplementary Note 28]

A processing system comprising:
a processing apparatus configured to process a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to process the first object,
the processing apparatus being configured to process the first object and process a second object of the plurality of objects that is different from the first object based on the first processing control information.

### [Supplementary Note 29]

A processing method comprising:
performing a first measurement operation for measuring a shape of a first object of a plurality of obj ects;
generating, based on a result of the first measurement operation, first processing control information for performing an additive processing on the first object; and
performing, based on the first processing control information, the additive processing on the first object and the additive processing on a second object of the plurality of objects that is different from the first object.

### [Supplementary Note 30]

The processing method according to Supplementary Note 29 comprising:
placing a plurality of third objects including the first and second objects on the object placement apparatus;
placing a plurality of fourth objects different from the plurality of third objects on the object placement apparatus after the additive processing is performed on the plurality of third objects placed on the object placement apparatus; and
performing, based on the first processing control information, the additive processing on the plurality of fourth objects.

### [Supplementary Note 31]

The processing method according to Supplementary Note 29 or 30, wherein
sizes of at least two of the plurality of objects are different from each other.

### [Supplementary Note 32]

The processing method according to Supplementary Note 31, wherein
a difference in size between the at least two objects after the additive processing is performed is smaller than a difference in size between the at least two objects before the additive processing is performed.

### [Supplementary Note 33]

The processing method according to any one of Supplementary Notes 29 to 32 further comprising performing a second measurement operation for measuring a shape of each of the plurality of objects before the additive processing is performed on the plurality of objects,
the additive processing being not performed on a fifth object, whose shape measured by the second measurement operation does not satisfy a predetermined shape criterion, among the plurality of objects.

### [Supplementary Note 34]

The processing method according to any one of Supplementary Notes 29 to 33 comprising
performing a second measurement operation for measuring a shape of each of the plurality of objects before the additive processing is performed on the plurality of objects;
correcting the first processing control information based on a measured result by the second measurement operation of a shape of a fifth object, whose shape measured by the second measurement operation does not satisfy a predetermined shape criterion, among the plurality of objects; and
performing the additive processing on the fifth object based on the corrected first processing control information.

### [Supplementary Note 35]

The processing method according to any one of Supplementary Notes 29 to 34 comprising:
performing a second measurement operation for measuring a shape of each of the plurality of objects before the additive processing is performed on the plurality of objects;
performing a third measurement operation for measuring a shape of a fifth object, whose shape measured by the second measurement operation does not satisfy a predetermined shape criterion, among the plurality of obj ects with a second measurement accuracy that is higher than the first measurement accuracy;
generating, based on a result of the third measurement operation, second processing control information for performing the additive processing on the fifth object; and
performing the additive processing on the fifth object based on the second processing control information.

### [Supplementary Note 36]

The processing method according to any one of Supplementary Notes 33 to 35, wherein
the second measurement operation is an operation for measuring the shape of each of the plurality of objects with a first measurement accuracy,
the first measurement operation is an operation for measuring the shape of the first object with a second measurement accuracy that is higher than the first measurement accuracy.

### [Supplementary Note 37]

The processing method according to any one of Supplementary Notes 33 to 36, wherein
performing the second measurement operation includes performing the second measurement operation after a pre-processing process is performed on at least one of the plurality of objects.

### [Supplementary Note 38]

The processing method according to any one of Supplementary Notes 33 to 37, wherein
performing the second measurement operation includes performing the second measurement operation before a pre-processing process is performed on at least one of the plurality of objects.

### [Supplementary Note 39]

The processing method according to Supplementary Note 37 or 38, wherein
the pre-processing process includes a removal processing process for removing a part of at least one of the plurality of objects.

### [Supplementary Note 40]

The processing method according to any one of Supplementary Notes 29 to 39 comprising a fourth measurement operation for measuring a shape of at least one of the first and second objects is performed after the additive processing is performed on at least one of the first and second objects.

### [Supplementary Note 41]

The processing method according to Supplementary Note 40 comprising processing at least one of the first and second objects based on a result of the fourth measurement operation.

### [Supplementary Note 42]

The processing method according to Supplementary Note 40 or 41 comprising processing at least one of the first and second objects based on a result of the fourth measurement operation so that the shape of at least one of the first and second objects become a desired shape.

### [Supplementary Note 43]

The processing method according to any one of Supplementary Notes 40 to 42 comprising outputting information related to a result of the fourth measurement operation to a processing apparatus configured to process at least one of the first and second objects based on the result of the fourth measurement operation.

### [Supplementary Note 44]

The processing method according to any one of Supplementary Notes 29 to 43, wherein
performing the additive processing on the first and second objects includes:
performing the additive processing on a first surface of each of the first and second objects;
changing an attitude of an object placement apparatus on which the first and second objects are placed; and
performing the additive processing on a second surface, which is different from the first surface, of each of the first and second objects by changing the attitude of the object placement apparatus on which the first and second objects are placed.

### [Supplementary Note 45]

The processing method according to any one of Supplementary Notes 29 to 44, wherein
performing the additive processing on the first and second objects includes:
performing the additive processing on a first surface of each of the first and second objects;
changing attitude of the plurality of objects placed on a jig; and
performing the additive processing on a second surface, which is different from the first surface, of each of the first and second objects.
   es of the plurality of objects.

### [Supplementary Note 46]

The processing method according to any one of Supplementary Notes 29 to 45, wherein at least one of the plurality of objects includes a turbine blade and a turbine shaft.

### [Supplementary Note 47]

The processing method according to any one of Supplementary Notes 29 to 46, wherein
the additive processing includes a repair processing,
generating the first processing control information includes generating the first first processing control information based on at least one of shape information related to a shape of the first object after repair and a result of the first measurement operation.

### [Supplementary Note 48]

The processing method according to Supplementary Note 47, wherein
generating the first processing control information based on at least one of the shape information and the first measurement includes generating the first processing control information based on a comparison result of the shape information and the result to of the first measurement operation.

### [Supplementary Note 49]

The processing method according to any one of Supplementary Notes 29 to 48, wherein
the plurality of objects are a plurality of workpieces including a first and second workpieces that correspond to the first and second objects, respectively,
generating the first processing control information includes generating, as the first processing control information, processing control information for processing the first workpiece based on at least one of shape information related to a shape of a model of a sixth object that is formed on the plurality of workpieces and a result of the first measurement operation,
the additive processing includes a repair processing.

### [Supplementary Note 50]

A processing method comprising:
generating, based on at least one of shape information related to a shape of a first object of a plurality of objects after repair and a measured result of a shape of the first object, first processing control information for processing the first object; and
perform, based on the first processing control information, a repair processing on the first object and a second object of the plurality of objects that is different from the first object.

### [Supplementary Note 51]

The processing method according to Supplementary Note 50, wherein
generating first processing control information based on at least one of the shape information and the measured result includes generating the first processing control information based on a comparison result of the shape information and the measured result.

### [Supplementary Note 52]

A processing method comprising:
generating, based on at least one of shape information related to a shape of a first part of a plurality of parts of an object after repair and a measured result of a shape of the first part, first processing control information for processing the first part; and
performing, based on the first processing control information, a repair processing on the first part and a second part of the plurality of parts that is different from the first part.

### [Supplementary Note 53]

A processing method comprising:
generating, based on at least one of shape information related to a shape of a model of a first object that is formed on a plurality of workpieces and a measured result of a shape of a first workpiece of the plurality of workpieces, first processing control information for processing the first workpiece; and
perform, based on the first processing control information, a repair processing on the first workpiece and a second workpiece of the plurality of workpieces that is different from the first workpiece.

### [Supplementary Note 54]

A processing method comprising:
performing a first measurement operation for measuring a shape of a first object of an plurality of obj ects;
generating, based on a result of the first measurement operation, first processing control information for processing the first object; and
processing the first object and processing a second object of the plurality of objects that is different from the first object based on the first processing control information.

### [Supplementary Note 55]

A processing system comprising:
a processing apparatus configured to perform an additive processing on a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to perform the additive processing on the first object,
the processing apparatus being configured to perform, based on the first processing control information, the additive processing on the first object and the additive processing on a second object of the plurality of objects that is different from the first object.

### [Supplementary Note 56]

A processing system comprising:
a processing apparatus configured to perform a repair processing on a plurality of objects; and
a control apparatus configured to control the processing apparatus,
the control apparatus being configured to generate, based on at least one of shape information related to a shape of a first object of the plurality of objects after repair and a measured result of a shape of the first object, first processing control information for controlling the processing apparatus to process the first object,
the processing apparatus being configured to perform, based on the first processing control information, the repair processing on the first object and a second object of the plurality of objects that is different from the first object.

### [Supplementary Note 57]

A processing system comprising:
a processing apparatus configured to perform a repair processing on a plurality of parts of an obj ect; and
a control apparatus configured to control the processing apparatus,
the control apparatus being configured to generate, based on at least one of shape information related to a shape of a first part of the plurality of parts after repair and a measured result of a shape of the first part, first processing control information for controlling the processing apparatus to process the first part,
the processing apparatus being configured to perform, based on the first processing control information, the repair processing on the first part and a second part of the plurality of parts that is different from the first part.

### [Supplementary Note 58]

A processing system comprising:
a processing apparatus configured to perform an additive processing on a plurality of workpieces; and
a control apparatus configured to control the processing apparatus,
the control apparatus being configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece,
the processing apparatus being configured to perform, based on the first processing control information, a repair processing on the first workpiece and a second workpiece of the plurality of objects that is different from the first workpiece.

### [Supplementary Note 59]

A processing system comprising:
a processing apparatus configured to process a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to process the first object,
the processing apparatus being configured to process the first object and process a second object of the plurality of objects that is different from the first object based on the first processing control information.

### [Supplementary Note 60]

A processing system comprising:
a processing apparatus configured to process an object; and
a stage apparatus that has a structure configured to hold the object,
a jig in which a through-hole is formed and a pin structure that is insertable into the through-hole are formed in the stage apparatus,
the jig is placed on the stage apparatus in a state where the pin structure is inserted into the through-hole.

At least a part of the features of each embodiment described above may be properly combined with at least another part of the features of each embodiment described above. Apart of the features of each embodiment described above may not be used. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a processing system, which involves such changes, is also intended to be within the technical scope of the present invention.

### Description of Reference Codes

- 2: build apparatus
- 21: build head
- 22: head driving system
- 3: stage apparatus
- 31, 31θX, 31θZ: stage
- 32: stage driving system
- 7: control apparatus
- W: workpiece
- EL: processing light
- ST: three-dimensional structural object

## Claims

1. A processing system comprising:
a processing apparatus configured to perform an additive processing on a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to perform the additive processing on the first object,
the processing apparatus being configured to perform, based on the first processing control information, the additive processing on the first object and the additive processing on a second object of the plurality of objects that is different from the first object.

2. The processing system according to claim 1 further comprising an object placement apparatus on which the plurality of obj ects are placed,
after the processing apparatus performs the additive processing on a plurality of third objects including the first and second objects, a plurality of fourth objects different from the plurality of third objects being placed on the object placement apparatus,
the processing apparatus being configured to perform, based on the first processing control information, the additive processing on the plurality of fourth objects.

3. The processing system according to claim 1 or 2, wherein
the processing apparatus includes:
an energy beam irradiation part configured to emit an energy beam toward each of the plurality of obj ects; and
a material supply part configured to supply a build material to a part that is irradiated with the energy beam.

4. The processing system according to any one of claims 1 to 3, wherein
sizes of at least two of the plurality of objects are different from each other.

5. The processing system according to claim 4, wherein
a difference in size between the at least two objects after the processing apparatus performs the additive processing is smaller than a difference in size between the at least two objects before the processing apparatus performs the additive processing.

6. The processing system according to any one of claims 1 to 5 further comprising a measurement apparatus configured to perform the first measurement operation.

7. The processing system according to any one of claims 1 to 6, wherein
a second measurement operation for measuring a shape of each of the plurality of objects is performed before the processing apparatus performs the additive processing on the plurality of obj ects,
the processing apparatus is configured not to perform the additive processing on a fifth object, whose shape measured by the second measurement operation does not satisfy a predetermined shape criterion, among the plurality of objects.

8. The processing system according to any one of claims 1 to 7, wherein
a second measurement operation for measuring a shape of each of the plurality of objects is performed before the processing apparatus performs the additive processing on the plurality of obj ects,
the control apparatus is configured to correct the first processing control information based on a measured result by the second measurement operation of a shape of a fifth object, whose shape measured by the second measurement operation does not satisfy a predetermined shape criterion, among the plurality of obj ects,
the processing apparatus is configured to perform the additive processing on the fifth object based on the corrected first processing control information.

9. The processing system according to any one of claims 1 to 8, wherein
a second measurement operation for measuring a shape of each of the plurality of objects with a first measurement accuracy is performed before the processing apparatus performs the additive processing on the plurality of objects,
a third measurement operation for measuring a shape of a fifth object, whose shape measured by the second measurement operation does not satisfy a predetermined shape criterion, among the plurality of objects with a second measurement accuracy that is higher than the first measurement accuracy is performed,
the control apparatus is configured to generate, based on a result of the third measurement operation, second processing control information for controlling the processing apparatus to perform the additive processing on the fifth object,
the processing apparatus is configured to perform the additive processing on the fifth object based on the second processing control information.

10. The processing system according to claim 9 further comprising a measurement apparatus configured to perform the third measurement operation.

11. The processing system according to any one of claims 7 to 10 further comprising a measurement apparatus configured to perform the second measurement operation.

12. The processing system according to any one of claims 7 to 11, wherein
the second measurement operation is an operation for measuring the shape of each of the plurality of objects with a first measurement accuracy,
the first measurement operation is an operation for measuring the shape of the first object with a second measurement accuracy that is higher than the first measurement accuracy.

13. The processing system according to any one of claims 7 to 12, wherein
the second measurement operation is performed after a pre-processing process is performed on at least one of the plurality of objects.

14. The processing system according to any one of claims 7 to 13, wherein
the second measurement operation is performed before a pre-processing process is performed on at least one of the plurality of objects.

15. The processing system according to claim 13 or 14, wherein
the pre-processing process includes a removal processing process for removing a part of at least one of the plurality of objects.

16. The processing system according to any one of claims 1 to 15, wherein
a fourth measurement operation for measuring a shape of at least one of the first and second objects is performed after the processing apparatus performs the additive processing on at least one of the first and second objects.

17. The processing system according to claim 16, wherein
the processing apparatus processes at least one of the first and second objects based on a result of the fourth measurement operation.

18. The processing system according to claim 16 or 17, wherein
the processing apparatus is configured to process at least one of the first and second objects based on a result of the fourth measurement operation so that the shape of at least one of the first and second objects become a desired shape.

19. The processing system according to any one of claims 16 to 18 further comprising a measurement apparatus configured to perform the fourth measurement operation.

20. The processing system according to claim 19, wherein
the measurement apparatus is configured to output information related to a result of the fourth measurement operation to an apparatus external to the processing system.

21. The processing system according to any one of claims 1 to 20 further comprising:
an object placement apparatus on which the plurality of objects are placed; and
an attitude change apparatus configured to change an attitude of the object placement apparatus,
the processing apparatus being configured to perform the additive processing on a first surface of each of the first and second objects, and then, perform the additive processing on a second surface, which is different from the first surface, of each of the first and second objects after the attitude change apparatus changes the attitude of the object placement apparatus.

22. The processing system according to any one of claims 1 to 21, wherein
the processing apparatus is configured to perform the additive processing on the plurality of objects placed on a jig,
attitudes of the plurality of objects placed on the jig are changeable,
the processing apparatus being configured to perform the additive processing on a first surface of each of the first and second objects, and then, perform the additive processing on a second surface, which is different from the first surface, of each of the first and second objects after the jig changes the attitudes of the plurality of objects.

23. The processing system according to any one of claims 1 to 22, wherein
at least one of the plurality of objects includes a turbine blade and a turbine shaft.

24. A processing system comprising:
a processing apparatus configured to perform a repair processing on a plurality of objects; and
a control apparatus configured to control the processing apparatus,
the control apparatus being configured to generate, based on at least one of shape information related to a shape of a first object of the plurality of objects after repair and a measured result of a shape of the first object, first processing control information for controlling the processing apparatus to process the first object,
the processing apparatus being configured to perform, based on the first processing control information, the repair processing on the first object and a second object of the plurality of objects that is different from the first object.

25. The processing system according to claim 24, wherein
the control apparatus is configured to generate the first processing control information based on a comparison result of the shape information related to the shape of the first object after repair and the measured result of the shape of the first object.

26. A processing system comprising:
a processing apparatus configured to perform a repair processing on a plurality of parts of an obj ect; and
a control apparatus configured to control the processing apparatus,
the control apparatus being configured to generate, based on at least one of shape information related to a shape of a first part of the plurality of parts after repair and a measured result of a shape of the first part, first processing control information for controlling the processing apparatus to process the first part,
the processing apparatus being configured to perform, based on the first processing control information, the repair processing on the first part and a second part of the plurality of parts that is different from the first part.

27. A processing system comprising:
a processing apparatus configured to perform an additive processing on a plurality of workpieces; and
a control apparatus configured to control the processing apparatus,
the control apparatus being configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece,
the processing apparatus being configured to perform, based on the first processing control information, a repair processing on the first workpiece and a second workpiece of the plurality of objects that is different from the first workpiece.

28. A processing system comprising:
a processing apparatus configured to process a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to process the first object,
the processing apparatus being configured to process the first object and process a second object of the plurality of objects that is different from the first object based on the first processing control information.

29. A processing system comprising:
a processing apparatus configured to perform an additive processing on a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to perform the additive processing on the first object,
the processing apparatus being configured to perform, based on the first processing control information, the additive processing on the first object and the additive processing on a second object of the plurality of objects that is different from the first object.

30. A processing system comprising:
a processing apparatus configured to perform a repair processing on a plurality of objects; and
a control apparatus configured to control the processing apparatus,
the control apparatus being configured to generate, based on at least one of shape information related to a shape of a first object of the plurality of objects after repair and a measured result of a shape of the first object, first processing control information for controlling the processing apparatus to process the first object,
the processing apparatus being configured to perform, based on the first processing control information, the repair processing on the first object and a second object of the plurality of objects that is different from the first object.

31. A processing system comprising:
a processing apparatus configured to perform a repair processing on a plurality of parts of an obj ect; and
a control apparatus configured to control the processing apparatus,
the control apparatus being configured to generate, based on at least one of shape information related to a shape of a first part of the plurality of parts after repair and a measured result of a shape of the first part, first processing control information for controlling the processing apparatus to process the first part,
the processing apparatus being configured to perform, based on the first processing control information, the repair processing on the first part and a second part of the plurality of parts that is different from the first part.

32. A processing system comprising:
a processing apparatus configured to perform an additive processing on a plurality of workpieces; and
a control apparatus configured to control the processing apparatus,
the control apparatus being configured to generate, based on at least one of shape information related to a shape of a model of a first object that is formed on the plurality of workpieces and a measured result of a shape of a first workpiece of the plurality of workpieces, first processing control information for controlling the processing apparatus to process the first workpiece,
the processing apparatus being configured to perform, based on the first processing control information, a repair processing on the first workpiece and a second workpiece of the plurality of objects that is different from the first workpiece.

33. A processing system comprising:
a processing apparatus configured to process a plurality of objects; and
a control apparatus configured to control the processing apparatus,
the control apparatus being configured to generate, based on a result of a first measurement operation for measuring a shape of a first object of the plurality of objects, first processing control information for controlling the processing apparatus to process the first object,
the processing apparatus being configured to process the first object and process a second object of the plurality of objects that is different from the first object based on the first processing control information.
